# EUROPEAN PATENT SPECIFICATION

(11) **EP 4 142 340 B1**
(45) Date of publication and mention of the grant of the patent: **12.11.2025**
(21) Application number: 21804406.3
(22) Date of filing: 24.02.2021
(51) Int. Cl.: H04W 24/02, H04W 48/20, H04W 48/14

(54) **COMMUNICATION METHOD AND APPARATUS FOR NETWORK SLICE ACCESS**
KOMMUNIKATIONSVERFAHREN UND -VORRICHTUNG FÜR NETZWERKSCHEIBEN-ZUGANG
PROCÉDÉ ET APPAREIL DE COMMUNICATION POUR L'ACCÈS AUX TRANCHES DE RÉSEAU

(30) Priority: 15.05.2020 CN 202010413661
(43) Date of publication of application: 01.03.2023
(73) Proprietor: Huawei Technologies Co., Ltd., Longgang District, Shenzhen, Guangdong 518129 (CN)
(72) Inventor: ZHU, Fangyuan, Shenzhen, Guangdong 518129 (CN); LI, Yan, Shenzhen, Guangdong 518129 (CN)
(74) Representative: Körber, Martin Hans
(86) International application number: PCT/CN2021/077701
(87) International publication number: WO 2021/227599

(56) References cited:
- WO-A1-2017/140340
- CN-A- 109 862 579
- CN-A- 110 267 327
- CN-A- 110 267 327
- CN-A- 110 463 335
- CN-A- 110 769 458
- "3rd Generation Partnership Project; Technical Specification Group Services and System Aspects; System architecture for the 5G System (5GS); Stage 2 (Release 16)", vol. SA WG2, no. V16.4.0, 27 March 2020 (2020-03-27), pages 1 - 430, XP051861090, Retrieved from the Internet <URL:ftp://ftp.3gpp.org/Specs/archive/23_series/23.501/23501-g40.zip 23501-g40.docx> [retrieved on 20200327]
- CATT: "Slice Based UE Mobility Optimization", vol. RAN WG2, no. Reno, USA; 20190513 - 20190517, 1 May 2019 (2019-05-01), XP051710220, Retrieved from the Internet <URL:http://www.3gpp.org/ftp/tsg%5Fran/WG2%5FRL2/TSGR2%5F106/Docs/R2%2D1905869%2Ezip> [retrieved on 20190501]

## Description

### TECHNICAL FIELD

Embodiments of this application relate to the field of communications technologies, and in particular, to a communication method and apparatus.

### BACKGROUND

A physical network may be abstracted into a plurality of network slices (network slices), each network slice forms an end-to-end logical network, and different network slices are logically isolated from each other. Each network slice may flexibly provide one or more types of network services as required, without affecting other network slices. Currently, standard-defined network slice types include enhanced mobile broadband (enhanced mobile broadband, eMBB) network slices, ultra-reliable low-latency communication (ultra-reliable low-latency communication, URLLC) network slices, and massive internet of things (massive internet of things, MIoT) network slices. Generally, different network slices have different performance requirements. For example, a network slice for an augmented reality (augmented reality, AR) service or a virtual reality (virtual reality, VR) service requires a high bandwidth and a low latency. A network slice for an internet of things (internet of things, IOT) service requires support of access of massive terminals, but is insensitive to a bandwidth and a latency.

Considering that performance requirements of various network slices are different, different network slices may correspond to different radio resources (for example, frequencies or frequency bands) that need to be accessed. For example, an eMBB network slice needs to be accessed from 2.6 GHz or 4.9 GHz, and a URLLC network slice needs to be accessed from 4.9 GHz. Alternatively, different network slices may correspond to different access network devices that need to be accessed. For example, an access network device 1 supports access of an MIoT network slice, and the access network device 1 does not support access of a URLLC network slice.

When a terminal requests to access a network slice a, in a possible case, an access network device currently accessed by the terminal does not support the network slice a; in another case, an access network device currently accessed by the terminal supports the network slice a, but a radio resource used by the terminal to access the access network device does not support the network slice a. In both cases, the terminal cannot normally access the network slice a that the terminal requests to access. In this case, the terminal blindly selects an access network device and a radio resource, which leads to a low probability of successfully accessing the network slice by the terminal and a low speed of successfully accessing the network slice.

CN 110 267 327 A describes a service transmission method applied to a 5G network communication system, which focuses on efficiently managing service transmissions between a terminal and multiple base stations using different network slices. 3GPP TS 23.501 V16.4.0 discusses the configuration of network slice availability in a PLMN. CATT, "Slice Based UE Mobility Optimization", vol. RAN WG2, 20190501, 3GPP DRAFT; R2-1905869, discusses that if the slice UE wants to register is not available in the current TA, the core network will reject the slice and give the feedback to UE.

### SUMMARY

Embodiments of this application provide a communication method and apparatus, to resolve a problem that a terminal cannot normally access a network slice that the terminal requests to access.

The invention is defined by the appended set of claims.

According to a first aspect, a communication method is provided. The method is applied to an access and mobility management function (access and mobility management function, AMF) device. First, an AMF device receives a first message from a terminal via a first access network device, where the first message includes an identifier of a first network slice that the terminal requests to access. Then, the AMF device determines that the first access network device does not support the first network slice. Then, the AMF device sends a second message to a first communication device, where the second message includes second radio resource information, the second radio resource information is usable for selecting a second access network device for the terminal, the second access network device supports the first network slice, and the first communication device is the first access network device or the terminal.

In the current technologies, a terminal usually blindly selects an access network device, and consequently the terminal cannot access a requested first network slice. In this embodiment, the AMF device determines the second radio resource information based on the first network slice that the terminal requests to access. When the currently accessed first access network device does not support the first network slice, the terminal accesses the second access network device based on the second radio resource information. Because the second access network device is determined based on the second radio resource information, and the second radio resource information is determined based on the first network slice, it can be ensured that the terminal accesses the first network slice by using the second access network device, and a success rate and efficiency of accessing the network slice by the terminal can be improved.

In a possible implementation, when the first communication device is the first access network device, the second radio resource information may be a radio access technology/frequency selection priority index (radio access technology/frequency selection priority index, RFSP Index). Accordingly, the first access network device may determine frequency band priority list information corresponding to the RFSP index, and send the frequency band priority list information to the terminal. Therefore, the terminal may access the second access network device based on the frequency band priority list information, and further access the first network slice by using the second access network device.

In a possible implementation, when the first communication device is the terminal, the second radio resource information may be the frequency band priority list information. The AMF device directly sends the frequency band priority list information to the terminal. Therefore, the terminal may access the second access network device based on the frequency band priority list information, and further access the first network slice by using the second access network device.

In a possible implementation, the AMF device allows access of the terminal to the first network slice, or the AMF device rejects access of the terminal to the first network slice. Rejecting access of the terminal to the first network slice is actually merely intended to indicate that the first access network device does not support the first network slice, instead of limiting access of the terminal to the first network slice.

In a possible implementation, the second message may further include first indication information. When the first communication device is the terminal, the first indication information indicates at least one of the following: indicating the terminal to release a wireless connection; indicating the terminal to initiate a registration procedure after entering an idle mode; indicating that the first access network device currently accessed by the terminal does not support the first network slice; and indicating the terminal to access the first network slice based on the second radio resource information, where the first network slice is associated with the second radio resource information. When the first communication device is the first access network device, the first indication information indicates at least one of the following: indicating the first access network device to release a wireless connection; and indicating that the first access network device does not support the first network slice.

In a possible implementation, the AMF device may further send a third message to a policy control function PCF device, where the third message may include the identifier of the first network slice; and the AMF device may further receive a fourth message from the PCF device, where the fourth message includes the RFSP index. The AMF device obtains the RFSP index from the PCF device, so as to subsequently send the RFSP index to the first access network device, or determine the frequency band priority list information corresponding to the RFSP index and send the frequency band priority list information to the terminal. The RFSP index may be determined based on the identifier of the first network slice, and then the terminal may access the first network slice based on the frequency band priority list information determined based on the RFSP index.

According to a second aspect, a communication method is provided. The method is applied to an AMF device. First, an AMF device receives a first message from a terminal via a first access network device, where the first message includes an identifier of a first network slice that the terminal requests to access. Then, the AMF device determines that first radio resource information selected by the terminal to access the first access network device does not support the first network slice. Then, the AMF device sends a second message to a first communication device, where the second message includes second radio resource information, the second radio resource information is usable for accessing the first access network device for the terminal based on the second radio resource information, the first access network device supports the first network slice, and the first communication device is the first access network device or the terminal.

In the current technologies, a terminal usually blindly selects an access network device and radio resource information, and consequently the terminal cannot access a requested first network slice. In this embodiment, the AMF device determines the second radio resource information based on the first network slice. When the first radio resource information selected by the terminal to currently access the first access network device does not support the first network slice, the terminal accesses the first access network device based on the second radio resource information. Because the second radio resource information is determined based on the first network slice, it can be ensured that the terminal accesses the first network slice by using the second radio resource information and the first access network device, and a success rate and efficiency of accessing the network slice by the terminal can be improved.

In a possible implementation, when the first communication device is the first access network device, the second radio resource information may be an RFSP index. Accordingly, the first access network device may determine frequency band priority list information corresponding to the RFSP index, and send the frequency band priority list information to the terminal. Therefore, the terminal may access the first access network device based on the frequency band priority list information, and further access the first network slice by using the first access network device.

In a possible implementation, when the first communication device is the terminal, the second radio resource information may be the frequency band priority list information. The AMF device directly sends the frequency band priority list information to the terminal. Therefore, the terminal may access the first access network device based on the frequency band priority list information, and further access the first network slice by using the first access network device.

In a possible implementation, the AMF device may further receive the first radio resource information from the first access network device. That is, the first radio resource information selected by the terminal to access the first access network device is obtained from the first access network device.

In a possible implementation, the AMF device allows access of the terminal to the first network slice, or the AMF device rejects access of the terminal to the first network slice. Rejecting access of the terminal to the first network slice is actually merely intended to indicate that the first access network device does not support the first network slice, instead of limiting access of the terminal to the first network slice.

In a possible implementation, the second message further includes first indication information. When the first communication device is the terminal, the first indication information indicates at least one of the following: indicating the terminal to release a wireless connection; indicating the terminal to initiate a registration procedure after entering an idle mode; indicating that the first radio resource information selected by the terminal to access the first access network device does not support the first network slice; indicating that the first radio resource information selected by the terminal to access the first access network device is incorrect; and indicating the terminal to access the first network slice based on the second radio resource information, where the first network slice is associated with the second radio resource information. When the first communication device is the first access network device, the first indication information indicates at least one of the following: indicating the first access network device to release a wireless connection; indicating that the first radio resource information selected by the terminal to access the first access network device does not support the first network slice; and indicating that the first radio resource information selected by the terminal to access the first access network device is incorrect.

In a possible implementation, the AMF device may further send a third message to a policy control function PCF device, where the third message may include the identifier of the first network slice; and the AMF device may further receive a fourth message from the PCF device, where the fourth message includes the RFSP index. The AMF device obtains the RFSP index from the PCF device, so as to subsequently send the RFSP index to the first access network device, or determine the frequency band priority list information corresponding to the RFSP index and send the frequency band priority list information to the terminal. The RFSP index may be determined based on the identifier of the first network slice, and then the terminal may access the first network slice based on the frequency band priority list information determined based on the RFSP index.

According to a third aspect, a communication method is provided. The method is applied to a terminal. First, the terminal sends a first message to an AMF device by using a first access network device, where the first message includes an identifier of a first network slice that the terminal requests to access. Then, the terminal receives second radio resource information, where the second radio resource information is associated with the first network slice. Then, the terminal receives first indication information from the AMF device. The second radio resource information and the first indication information may be received in a same message, or may be received in different messages. The first indication information indicates at least one of the following: indicating the terminal to release a wireless connection; indicating the terminal to initiate a registration procedure after entering an idle mode; indicating that the first access network device currently accessed by the terminal does not support the first network slice; indicating that first radio resource information selected by the terminal to access the first access network device does not support the first network slice; indicating that the first radio resource information selected by the terminal to access the first access network device is incorrect; and indicating that the terminal accesses the first network slice based on the second radio resource information.

In a possible implementation, the first access network device does not support the first network slice, and the terminal selects a second access network device based on the second radio resource information, where the second access network device supports the first network slice.

Specifically, the terminal may determine, based on the first indication information indicating that the first access network device currently accessed by the terminal does not support the first network slice, that the first access network device does not support the first network slice. Accordingly, the terminal selects the second access network device by using the second radio resource information in the first indication information. Because the second radio resource information is associated with the first network slice, the selected second access network device can support the first network slice.

In another possible implementation, the first radio resource information selected by the terminal to access the first access network device does not support the first network slice, and the terminal accesses the first access network device based on the second radio resource information, where the first access network device supports the first network slice.

Specifically, the terminal may determine, based on the first indication information indicating that the first radio resource information selected by the terminal to currently access the first access network device does not support the first network slice or the first radio resource information is incorrect, that the first radio resource information does not support the first network slice. Accordingly, the terminal may still access the first access network device by using the second radio resource information instead of the first radio resource information.

In a possible implementation, the terminal initiates a wireless connection release procedure, and enters an idle mode. Specifically, the terminal may initiate a registration procedure based on the first indication information indicating that the terminal releases the wireless connection or indicating the terminal to enter the idle mode, actively initiate the wireless connection release procedure, and enter the idle mode.

In a possible implementation, the terminal may receive the second radio resource information from the AMF device via the first access network device. Specifically, the AMF device may directly send the second radio resource information to the terminal, and the first access network device transparently transmits the second radio resource information to the terminal. The second radio resource information may be frequency band priority list information.

In another possible implementation, the terminal may further receive the second radio resource information from the first access network device. Specifically, the AMF device may first send information (for example, an RFSP index) for determining the second radio resource information to the first access network device, and the first access network device sends the second radio resource information to the terminal after determining the second radio resource information.

In a possible implementation, before the terminal receives the second radio resource information from the first access network device, the terminal may further send a request message to the first access network device, where the request message carries the identifier of the first network slice, and the request message requests to obtain the second radio resource information. The first access network device may actively send the second radio resource information to the terminal. Alternatively, the first access network device may send the second radio resource information to the terminal after the terminal requests the second radio resource information from the first access network device.

According to a fourth aspect, a communication method is provided. The method is applied to a first access network device. First, the first access network device receives a first message from a terminal, and sends the first message to an AMF device, where the first message includes an identifier of a first network slice that the terminal requests to access. Then, the first access network device receives a second message from the AMF device, where the second message includes second radio resource information and first indication information, and the second radio resource information is associated with the first network slice. The second radio resource information may be an RFSP index. The first indication information indicates at least one of the following: indicating the first access network device to release a wireless connection; indicating that the first access network device does not support the first network slice; indicating that first radio resource information selected by the terminal to access the first access network device does not support the first network slice; and indicating that the first radio resource information selected by the terminal to access the first access network device is incorrect.

In a possible implementation, the second radio resource information is usable for selecting a second access network device for the terminal, the second access network device supports the first network slice, and the first access network device does not support the first network slice; or the second radio resource information is usable for selecting the first access network device for the terminal, the first access network device supports the first network slice, and the first radio resource information selected by the terminal to access the first access network device does not support the first network slice. Because the second radio resource information is associated with the first network slice, the first access network device or the second access network device selected by the terminal can support the first network slice.

In a possible implementation, the first access network device releases a wireless connection. Specifically, the first access network device may actively release the wireless connection based on the first indication information indicating that the first access network device releases the wireless connection.

In a possible implementation, the first access network device sends, to the AMF device, the first radio resource information selected by the terminal to access the first access network device. Therefore, the AMF device can determine whether the first radio resource information supports the first network slice.

In a possible implementation, the second radio resource information received by the first access network device is an RFSP index, and the first access network device sends frequency band priority list information corresponding to the RFSP index to the terminal or the AMF device. The AMF device sends the RFSP index to the first access network device, and the first access network device sends the frequency band priority list information to the terminal, so that the terminal accesses the first network slice based on the frequency band priority list information. Alternatively, the AMF device sends the RFSP index to the first access network device, the first access network device sends the frequency band priority list information to the AMF device, and then the AMF device sends the frequency band priority list information to the terminal, so that the terminal accesses the first network slice based on the frequency band priority list information.

In a possible implementation, before the first access network device sends the frequency band priority list information corresponding to the RFSP index to the terminal, the first access network device may further receive a request message sent by the terminal, where the request message carries the identifier of the first network slice, the request message requests to obtain the second radio resource information, and the second radio resource information may be the frequency band priority list information. The first access network device may actively send the second radio resource information to the terminal. Alternatively, the first access network device may send the second radio resource information to the terminal after the terminal requests the second radio resource information from the first access network device.

According to a fifth aspect, a communication apparatus is provided. The apparatus has a function of implementing the AMF device in any one of the first aspect or the possible implementations of the first aspect, a function of implementing the AMF device in any one of the second aspect or the possible implementations of the second aspect, a function of implementing the terminal in any one of the third aspect or the possible implementations of the third aspect, or a function of implementing the first access network device in any one of the fourth aspect or the possible implementations of the fourth aspect. The function may be implemented by hardware, or may be implemented by hardware by executing corresponding software. The hardware or software includes one or more function modules corresponding to the foregoing function.

According to a sixth aspect, a communication apparatus is provided. The apparatus may be the AMF device according to any one of the first aspect or the possible implementations of the first aspect, or any one of the second aspect or the possible implementations of the second aspect, or may be a chip disposed in the AMF device. The apparatus includes a transceiver and a processor, and optionally, further includes a memory. The memory is configured to store a computer program or instructions. The processor is separately coupled to the memory and the transceiver. When the processor executes the computer program or the instructions, the apparatus is enabled to perform, by using the transceiver, the method performed by the AMF device in any one of the first aspect or the possible implementations of the first aspect, or the method performed by the AMF device in any one of the second aspect or the possible implementations of the second aspect.

According to a seventh aspect, a communication apparatus is provided. The apparatus may be the terminal in any one of the third aspect or the possible implementations of the third aspect of the method, or a chip disposed in the terminal. The apparatus includes a transceiver and a processor, and optionally, further includes a memory. The memory is configured to store a computer program or instructions. The processor is separately coupled to the memory and the transceiver. When the processor executes the computer program or the instructions, the apparatus is enabled to perform, by using the transceiver, the method performed by the terminal in any one of the third aspect or the possible implementations of the third aspect.

According to an eighth aspect, a communication apparatus is provided. The apparatus may be the first access network device in any one of the fourth aspect and the possible implementations of the fourth aspect of the method, or may be a chip disposed in the first access network device. The apparatus includes a transceiver and a processor, and optionally, further includes a memory. The memory is configured to store a computer program or instructions. The processor is separately coupled to the memory and the transceiver. When the processor executes the computer program or the instructions, the apparatus is enabled to perform, by using the transceiver, the method performed by the first access network device in any one of the fourth aspect or the possible implementations of the fourth aspect.

According to a ninth aspect, a computer program product is provided. The computer program product includes computer program code. When the computer program code is run on a computer, the computer is enabled to perform the method performed by the AMF device in any one of the first aspect or the possible implementations of the first aspect, perform the method performed by the AMF device in any one of the second aspect or the possible implementations of the second aspect, perform the method performed by the terminal in any one of the third aspect or the possible implementations of the third aspect, or perform the method performed by the first access network device in any one of the fourth aspect or the possible implementations of the fourth aspect.

According to a tenth aspect, this application provides a chip system. The chip system includes a processor and a memory. The processor and the memory are electrically coupled to each other. The memory is configured to store computer program instructions. The processor is configured to execute some or all computer program instructions in the memory. When the some or all computer program instructions are executed, the processor is configured to implement functions of the AMF device in the method according to any one of the first aspect or the possible implementations of the first aspect, implement functions of the AMF device in the method according to any one of the second aspect or the possible implementations of the second aspect, implement functions of the terminal in the method according to any one of the third aspect or the possible implementations of the third aspect, or implement functions of the first access network device in the method according to any one of the fourth aspect or the possible implementations of the fourth aspect.

In a possible design, the chip system may further include a transceiver. The transceiver is configured to send a signal processed by the processor, or receive a signal input to the processor. The chip system may include a chip, or may include a chip and another discrete component.

According to an eleventh aspect, a computer-readable storage medium is provided. The computer-readable storage medium stores a computer program. When the computer program is run, the method performed by the AMF device in any one of the first aspect or the possible implementations of the first aspect is performed, the method performed by the AMF device in any one of the second aspect or the possible implementations of the second aspect is performed, the method performed by the terminal in any one of the third aspect or the possible implementations of the third aspect is performed, or the method performed by the first access network device in any one of the fourth aspect or the possible implementations of the fourth aspect is performed.

According to a twelfth aspect, a communication system is provided. The system includes the AMF device that performs the method in any one of the first aspect or the possible implementations of the first aspect, and the first access network device that performs the method in any one of the fourth aspect or the possible implementations of the fourth aspect.

In a possible design, the communication system further includes the terminal that performs the method in any one of the third aspect or the possible implementations of the third aspect.

According to a thirteenth aspect, a communication system is provided. The system includes the AMF device that performs the method in any one of the second aspect or the possible implementations of the second aspect, and the first access network device that performs the method in any one of the fourth aspect or the possible implementations of the fourth aspect.

In a possible design, the communication system further includes the terminal that performs the method in any one of the third aspect or the possible implementations of the third aspect.

For technical effects that can be achieved in the fifth aspect to the thirteenth aspect, refer to the technical effects that can be achieved in any possible design in the first aspect to the fourth aspect. Details are not described herein again.

### BRIEF DESCRIPTION OF DRAWINGS

FIG. 1a, FIG. 1b, and FIG. 1c are schematic diagrams of communication system architectures according to embodiments of this application;
FIG. 2, FIG. 3, FIG. 4, and FIG. 5 are schematic diagrams of communication processes according to embodiments of this application; and
FIG. 6 and FIG. 7 show communication apparatuses according to embodiments of this application.

### DESCRIPTION OF EMBODIMENTS

The following describes in detail embodiments of this application with reference to accompanying drawings.

For ease of understanding embodiments of this application, the following first describes a part of terms in embodiments of this application, to help persons skilled in the art have a better understanding.

Technical solutions in embodiments of this application may be applied to various communication systems, for example, a long term evolution (long term evolution, LTE) system, a worldwide interoperability for microwave access (worldwide interoperability for microwave access, WiMAX) communication system, a 5th generation (5th Generation, 5G) system, a new radio (new radio, NR) access technology system, and a future communication system.

In this application, a 5G communication system is used as an example for description.

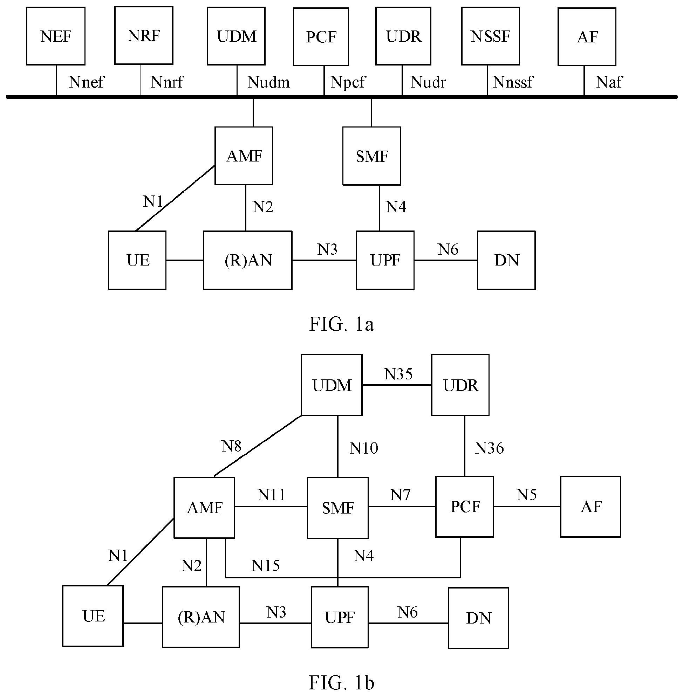

For example, FIG. 1a is a schematic diagram of a 5G communication system architecture to which this application is applicable. Specifically, FIG. 1a is a schematic diagram of a service-based 5G network architecture.

For example, FIG. 1b is a schematic diagram of another 5G communication system architecture to which this application is applicable. Specifically, FIG. 1b is a schematic diagram of a point-to-point-based 5G architecture. A main difference between FIG. 1a and FIG. 1b lies in that interfaces between network elements in FIG. 1a are service-based interfaces, and interfaces between network elements in FIG. 1b are point-to-point interfaces.

The 5G network architectures shown in FIG. 1a and FIG. 1b may include a terminal device part, an access network part, and a core network part. Optionally, a data network (data network, DN) and an application function (application function, AF) network element part are further included. A terminal accesses a core network through an access network, and the core network communicates with the DN or the AF. The following briefly describes functions of some network elements.

A terminal device (terminal device), which may also be referred to as user equipment (user equipment, UE), is a device that has a wireless transceiver function. The terminal device may be deployed on land, where the deployment includes indoor or outdoor, or handheld or vehicle-mounted deployment; may be deployed on water (for example, on a ship); or may be deployed in air (for example, on an airplane, a balloon, and a satellite). The terminal device may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self-driving (self-driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), or the like.

A (R)AN device in this application is a device that provides a wireless communication function for the terminal device, and the (R)AN device is also referred to as an access network device. The RAN device in this application includes but is not limited to: a next generation base station (gNodeB, gNB) in 5G, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a transmission reception point (transmission reception point, TRP), a transmission point (transmission point, TP), a mobile switching center, and the like.

The data network DN may have a plurality of services deployed, and may provide a terminal device with services such as a data service and/or a voice service. For example, the DN is a private network of a smart factory. A sensor installed in a workshop of the smart factory may be a terminal device, a control server and the sensor are deployed in the DN, and the control server may serve the sensor. The sensor may communicate with the control server, to obtain instructions of the control server, transmit collected sensor data to the control server according to the instructions, and the like. For another example, the DN is an internal office network of a company. A mobile phone or a computer of an employee of the company may be a terminal device, and the mobile phone or the computer of the employee may access information, data resources, and the like in the internal office network of the company.

An application network element mainly supports interaction with a 3rd generation partnership project (3rd generation partnership project, 3GPP) core network to provide services, for example, affect a data routing decision, a policy control function, or provide some third-party services for a network side. In the 5G communication system, the application network element may be an application function (application function, AF) network element. In the future communication system, the application network element may still be the AF network element, or may have another name. This is not limited in this application.

The core network part may include one or more of the following network elements.

An access management network element is a control plane network element provided by an operator network, and is responsible for access control and mobility management for accessing the operator network by the terminal device, for example, including functions such as mobility status management, allocation of a temporary user identity, and authentication and user authorization. In the 5G communication system, the access management network element may be an access and mobility management function (access and mobility management function, AMF) network element. In the future communication system, the access management network element may still be the AMF network element, or may have another name. This is not limited in this application.

A session management network element is mainly responsible for session management in a mobile network, for example, session establishment, modification, and release. Specific functions may be allocating an IP address to a user, selecting a user plane network element that provides a packet forwarding function, and the like. In the 5G communication system, the session management network element may be a session management function (session management function, SMF) network element. In the future communication system, the session management network element may still be the SMF network element, or may have another name. This is not limited in this application.

A user plane network element is responsible for forwarding and reception of user data in the terminal device. The user plane network element may receive the user data from the data network, and transmit the user data to the terminal device through the access network device. In addition, the user plane network element may alternatively receive the user data from the terminal device through the access network device, and forward the user data to the data network. A transmission resource and a scheduling function in the user plane network element that provide a service for the terminal device are managed and controlled by the SMF network element. In the 5G communication system, the user plane network element may be a user plane function (user plane function, UPF) network element. In a future communication system, the user plane network element may still be the UPF network element, or may have another name. This is not limited in this application.

A data management network element is configured to generate an authentication credential, process a subscriber identifier (for example, store and manage a subscription permanent identifier), control access, manage subscription data, and so on. In the 5G communication system, the data management network element may be a unified data management (unified data management, UDM) network element. In the future communication system, the unified data management network element may still be the UDM network element, or may have another name. This is not limited in this application.

A policy control network element mainly supports providing a unified policy framework to control network behavior and providing a policy rule for a control layer network function, and is responsible for obtaining user subscription information related to a policy decision. In a 4G communication system, the policy control network element may be a policy and charging rules function (policy and charging rules function, PCRF) network element. In the 5G communication system, the policy control network element may be a policy control function (policy control function, PCF) network element. In the future communication system, the policy control network element may still be the PCF network element, or may have another name. This is not limited in this application.

A network repository network element may be configured to provide a network element discovery function and provide, based on a request from another network element, network element information corresponding to a network element type. The NRF further provides a network element management service, for example, registration, update, and deregistration of a network element and subscription and push of a network element status. In the 5G communication system, the network repository network element (network repository function, NRF) may be a network registration function network element. In the future communication system, the network repository network element may still be the NRF network element, or may have another name. This is not limited in this application.

A network exposure function network element may be configured to securely expose, to the outside, a service, a capability, and the like that are provided by a 3GPP network function device. In the 5G communication system, the network exposure function network element may be the network exposure function (network exposure function, NEF) network element. In the future communication system, the network exposure function network element may still be the NEF network element, or may have another name. This is not limited in this application.

A network slice selection network element may be used for selecting an appropriate network slice for a service of a terminal. In the 5G communication system, the network slice selection network element may be a network slice selection function (network slice selection function, NSSF) network element. In the future communication system, the network exposure function network element may still be the NSSF network element, or may have another name. This is not limited in this application.

A network data analytics network element may collect data from each network function (network function, NF), for example, the policy control network element, the session management network element, the user plane network element, the access management network element, and the application function network element (by using a network capability exposure function network element), and perform analysis and prediction. In the 5G communication system, the network data analytics network element may be a network data analytics function (network data analytics function, NWDAF). In the future communication system, the network exposure function network element may still be the NWDAF network element, or may have another name. This is not limited in this application.

A unified data repository network element is responsible for storing structured data information, including subscription information, policy information, and network data or service data defined in a standard format. In the 5G communication system, the unified data repository network element may be a unified data repository (unified data repository, UDR). In the future communication system, the network exposure function network element may still be the UDR network element, or may have another name. This is not limited in this application.

It may be understood that the network elements or the functions may be network elements in a hardware device, may be software functions running on dedicated hardware, or may be virtualized functions instantiated on a platform (for example, a cloud platform). In a possible implementation, the network elements or the functions may be implemented by one device, may be jointly implemented by a plurality of devices, or may be one function module in one device. This is not specifically limited in embodiments of this application.

5GC network functions such as the NSSF, NRF, NWDAF, UDM, UDR and the AMF usually separately process services of a plurality of network slices. The SMF and the UPF generally process a service of a specific network slice. The PCF may process services of the plurality of network slices, or may process only the service of the specific network slice. The access network device usually processes the services of the plurality of network slices.

It should be understood that the foregoing network architecture used in the embodiments of this application is merely an example of a network architecture for description, and a network architecture applicable to the embodiments of this application is not limited thereto. Any network architecture that can implement the functions of the foregoing devices is applicable to the embodiments of this application.

For ease of understanding embodiments of this application, the following describes application scenarios of this application. The service scenarios described in embodiments of this application are intended to describe the technical solutions in embodiments of this application more clearly, but constitutes no limitation on the technical solutions provided in embodiments of this application. Persons of ordinary skill in the art may learn that the technical solutions provided in embodiments of this application are also applicable to a similar technical problem as a new service scenario emerges.

A physical network may be abstracted into a plurality of network slices (network slices). Each network slice forms an end-to-end logical network, and different network slices are logically isolated from each other. Each network slice may flexibly provide one or more network services as required, without affecting other network slices. Currently, standard-defined network slice types include eMBB network slices, URLLC network slices, and MIoT network slices.

Service areas of two different network slices may be completely different, may partially overlap, or may be completely the same. A service area of one network slice may include one or more tracking areas (tracking areas, TAs). The tracking area may be identified by using a tracking area identifier (tracking area identifier, TAI), where the TAI includes a mobile country code (mobile country code, MCC), a mobile network code (mobile network code, MNC), and a tracking area code (tracking area code, TAC). Alternatively, the tracking area may be identified by using the TAC. One or more AMF devices may be deployed in one tracking area to serve the tracking area, or one or more access network devices may be deployed to serve the tracking area. One or more network slices may be supported in one tracking area. When a network slice a is deployed in the tracking area, at least one of AMF devices serving the tracking area supports the network slice a. When an AMF device supports a network slice a, at least one of access network devices connected to the AMF device supports the network slice a.

One AMF device may serve one tracking area, or may serve a plurality of tracking areas. One access network device serves one tracking area. One tracking area may include one or more cells, and one access network device may serve one or more cells. One AMF device may support a same network slice or different network slices in different tracking areas. For example, both a tracking area 1 and a tracking area 2 support network slices a and b, and an AMF device serves both the tracking area 1 and the tracking area 2.

Generally, different network slices have different performance requirements. For example, a network slice for an AR or VR service requires a high bandwidth and a low latency. A network slice for an internet of things (internet of things, IOT) service requires support of access of massive terminals, but is insensitive to a bandwidth and a latency. Features of a wireless network vary greatly in frequency bands. For example, a low and medium frequency band has a larger coverage area and lower power consumption, and supports a low network access rate; and a high frequency band has a smaller coverage area and higher power consumption, and supports a higher network access rate and a low latency.

Considering that performance requirements of various network slices are different, different network slices may correspond to different radio resources (for example, frequencies (frequencies) or frequency bands (operating bands)) that need to be accessed, for example, as shown in Table 1.

**Table 1**

| Identifier of a network slice | Radio resource (for example, a frequency or a frequency band) deployed for the network slice |
|---|---|
| S-NSSAI-1 | A frequency resource is 2.6 GHz, or a frequency band resource is n1. |
| S-NSSAI-2 | Frequency resources are 2.6 GHz and 4.9 GHz, or frequency band resources are n77 and n38. |
| S-NSSAI-3 | A frequency resource is 4.9 GHz, or a frequency band resource is n38. |

n1, n77, and n38 in Table 1 represent numbers corresponding to frequency bands. According to definitions in the protocol 3GPP TS 38.101, the numbers corresponding to the frequency bands are described as shown in Table 2:

**Table 2**

| Frequency band number | Uplink frequency band Uplink (UL) operating band BS receive/UE transmit | Downlink frequency band Downlink (DL) operating band | Duplex mode (Duplex Mode) |
|---|---|---|---|
| | F_{UL_low} - F_{UL_high} | BS transmit/UE receive | |
| | | F_{DL_low} - F_{DL_high} | |
| n1 | 1920 MHz to 1980 MHz | 2110 MHz to 2170 MHz | Frequency division duplex (Frequency Division Duplex) |
| n77 | 3300 MHz to 4200 MHz | 3300 MHz to 4200 MHz | Time division duplex (Time Division Duplex) |
| n38 | 2570 MHz to 2620 MHz | 2570 MHz to 2620 MHz | Time division duplex |

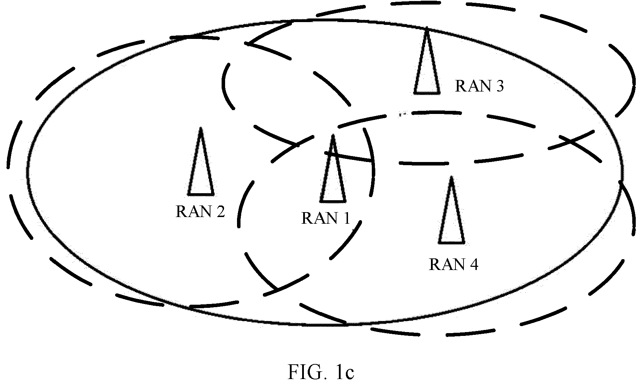

In addition, different network slices may correspond to different access network devices that need to be accessed. As shown in FIG. 1c, an access network device RAN 1 (where a coverage area range of the RAN 1 is the solid line part in the figure), a RAN 2, a RAN 3, and a RAN 4 (where coverage area ranges of the RAN 2, the RAN 3, and the RAN 4 are the dashed line parts in the figure) are deployed in a tracking area TA. For example, the access network device RAN 1 provides access to an MIoT network slice by using low and medium frequency bands, and provides access to an eMBB network slice by using a high frequency band.

The terminal cannot perceive which network slices are supported by the currently accessed access network device. In this case, the terminal attempts to access a network slice by a manner of blind accessing. It is assumed that a terminal user subscribes to a URLLC network slice and an eMBB network slice from an operator. If the terminal is located at the central location of the coverage area of the RAN 1, and is located at the cell edges of the RAN 2, the RAN 3, and the RAN 4, and the terminal detects that signal quality of the RAN 1 is good, the terminal accesses a network by using the RAN 1. If the terminal requests to access the URLLC network slice, but the RAN 1 does not support the URLLC network slice, the terminal cannot normally access the URLLC network slice that the terminal requests to access. If the terminal requests to access the eMBB network slice, and if the terminal accesses the RAN 1 in low and medium frequency bands, because the RAN 1 supports the eMBB network slice only in a high frequency band, the terminal still cannot normally access the eMBB network slice that the terminal requests to access.

The following describes in detail a plurality of technical solutions for communication provided in this application with reference to the accompanying drawings, so that the terminal can normally access the network slice. Features or content marked by dashed lines in the accompanying drawings may be understood as optional operations or optional structures in embodiments of this application.

The term "and/or" in this application describes an association relationship for describing associated objects and represents that three relationships may exist. For example, A and/or B may represent the following three cases: Only A exists, both A and B exist, and only B exists. The character "/" generally represents an "or" relationship between the associated objects.

"A plurality of" in this application means two or more.

In the descriptions of this application, terms such as "first" and "second" are only for distinction and description, but cannot be understood as indicating or implying relative importance, or as indicating or implying an order.

In addition, the word "example" in embodiments of this application is used to represent giving an example, an illustration, or a description. Any embodiment or implementation solution described as an "example" in this application should not be explained as being more preferred or having more advantages than another embodiment or implementation solution. Exactly, the word "example" is used to present a concept in a specific manner.

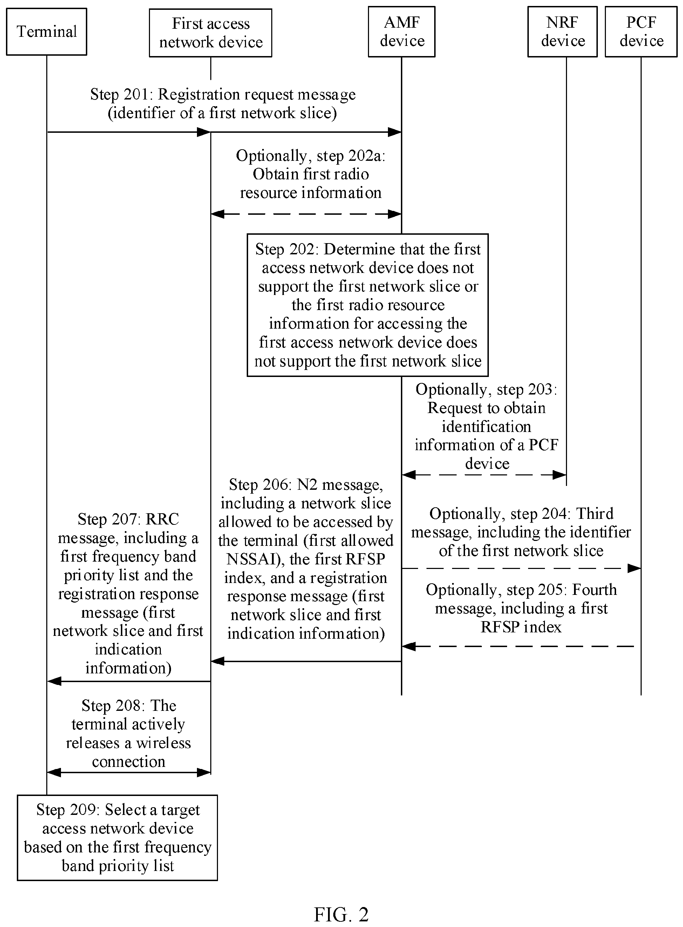

FIG. 2 is a schematic diagram of a communication process according to an embodiment of this application. The communication process specifically includes the following steps.

Step 201: A terminal sends a non-access stratum (non-access stratum, NAS) request message to an AMF device via a first access network device, and correspondingly the AMF device receives the NAS request message from the first access network device. The NAS request message includes an identifier of a first network slice that the terminal requests to access. There may be one or more first network slices that the terminal requests to access.

For example, the NAS request message carries requested NSSAI, and the requested NSSAI indicates the identifier of the first network slice that the terminal requests to access. For example, the requested NSSAI is S-NSSAI-2, that is, the identifier of the first network slice is the S-NSSAI-2.

Optionally, the first access network device may further send, to the AMF device, an identifier of a tracking area where the terminal is currently located and/or an identifier of a cell where the terminal is located. For example, the cell identifier may be a global cell identifier (cell global identifier, CGI).

In an example, the NAS request message may be a registration request (registration request) message. Only the terminal and a core network (core network, CN) device rather than an access network device need to process the NAS request message, and the access network device only needs to forward the NAS request message. For ease of differentiation, a NAS message sent by the terminal to the AMF device is referred to as a NAS request message. A NAS message sent by the AMF device to the terminal is referred to as a NAS response message.

The first access network device is an access network device currently accessed by the terminal (current RAN). Radio resource information selected by the terminal to access the first access network device is referred to as first radio resource information. The radio resource information herein may be a frequency, a frequency band, or a spectrum. This is not limited in this application. First frequency band information is, for example, a high frequency, an intermediate frequency, a low frequency, or a frequency value of a specific value, for example, 4.9 GHz.

Optionally, the first access network device may further send, to the AMF device, the first radio resource information selected by the terminal to access the first access network device.

Step 202: The AMF device may determine whether the first access network device supports the first network slice. When the first access network device supports the first network slice, the AMF device may further determine whether the first radio resource information selected by the terminal to currently access the first access network device supports the first network slice.

The AMF device obtains a network slice supported by an access network device deployed in an area served by the AMF device. Network slices supported by the access network device on specific radio resource information may be further obtained. The AMF device may determine, based on the information, whether the first access network device supports the first network slice and radio resource information on which the first access network device supports the first network slice. A method for the AMF device to obtain the foregoing information may be locally configured in the AMF device, or obtained by the AMF device from another network device. For example, the AMF device obtains the information from an access network device or a network slice selection function network element NSSF. This is not limited in this application.

In this embodiment of this application, that the AMF device determines whether the first access network device supports the first network slice may include but is not limited to the following several cases:
(1) Whether a TA where the first access network device is located supports the first network slice.
(2) Whether the first access network device supports the first network slice.
(3) Whether a cell (cell) served by the first access network device includes a cell supporting the first network slice.
(4) Whether a slicing area (slicing area, SA) where the first access network device is located supports the first network slice. An SA where an access network device is located includes one or more access network devices. A coverage area of the SA may be larger than a coverage area of the TA, or a coverage area of the SA may be smaller than a coverage area of the TA. This is not limited in this application.

For ease of description, whether the TA where the first access network device is located supports the first network slice is used as an example.

In an example, the AMF device may store information shown in Table 3. The AMF device obtains an identifier of an access network device (RAN) deployed in an area served by the AMF device, an identifier of a tracking area (TA) served by the access network device, and an identifier of a network slice supported by the tracking area where the access network device is located.

**Table 3**

| RAN deployed in the area served by the AMF device and TAI of a TA where the RAN is located | Slice type supported by the TAI of the TA where the RAN is located |
|---|---|
| RAN 1, TAI-1 | TAI-1: S-NSSAI-1 |
| RAN 2, TAI-2 | TAI-2: S-NSSAI-2 |
| RAN 3, TAI-2 | TAI-2: S-NSSAI-2 |

In the example of Table 3, the area served by the AMF device includes the TAI-1 and the TAI-2. The RAN 1 is located in the TAI-1, and a network slice supported by the TAI-1 is the S-NSSAI-1. The RAN 2 and the RAN 3 are located in the TAI-2, and a network slice supported by the TAI-2 is the S-NSSAI-2. When the requested NSSAI is the S-NSSAI-2, that is, the identifier of the first network slice is the S-NSSAI-2, if the first access network device is the RAN 1, that is, the current RAN is the RAN 1, the AMF device may determine that a TAI of a TA where the first access network device is located supports the S-NSSAI-1 but does not support the S-NSSAI-2, in other words, the first access network device supports the S-NSSAI-1 but does not support the S-NSSAI-2.

In another example, the AMF device may store information shown in Table 4, and the AMF device obtains a correspondence between a network slice and radio resource information required for accessing the network slice. The AMF device may support the network slice in Table 4 or may not support the network slice in Table 4. This is not limited in this application. The correspondence between a network slice and radio resource information required for accessing the network slice may be a one-to-one correspondence (that is, the network slice can be accessed by using only one radio resource), or may be a one-to-many correspondence (that is, the network slice can be accessed by using a plurality of radio resources). This is not limited in this application.

**Table 4**

| Identifier of a network slice | Radio resource information (such as a frequency or a frequency band) required for accessing the network slice |
|---|---|
| S-NSSAI-1 | Radio resource information 1 including for example, a frequency resource of 2.6 GHz or a frequency band resource of n1 |
| S-NSSAI-2 | Radio resource information 2 including for example, frequency resources of 2.6 GHz and 4.9 GHz or frequency band resources of n77 and n38 |
| S-NSSAI-3 | Radio resource information 3 including for example, a frequency resource of 4.9 GHz or a frequency band resource of n38 |

In an example of Table 4, radio resource information required for accessing a network slice (a network slice 1) identified by the S-NSSAI-1 is the radio resource information 1 including for example, a frequency resource of 2.6 GHz or a frequency band resource of n1. Radio resource information required for accessing a network slice (a network slice 2) identified by the S-NSSAI-2 is the radio resource information 2 including for example, frequency resources of 2.6 GHz and 4.9 GHz or frequency band resources of n77 and n38. In other words, the network slice 2 may be accessed by using 2.6 GHz or 4.9 GHz, or accessed by using a frequency band resource n77 or n38. Radio resource information required for accessing a network slice (a network slice 3) identified by the S-NSSAI-3 is the radio resource information 3, and the radio resource information 3 includes a frequency resource of 4.9 GHz or a frequency band resource of n38. Optionally, after step 202 is performed and before step 203, step 204, or step 206 is performed, when the first access network device does not support the first network slice, the AMF device may further determine whether there is a second access network device that supports the first network slice, and if there is a second access network device that supports the first network slice, perform step 203, step 204, or step 206.

A method for the AMF device to determine whether the second access network device supports the first network slice is the same as the foregoing method for the AMF device to determine whether the first access network device supports the first network slice. Details are not described herein again.

For ease of description, whether a TA where the second access network device is located supports the first network slice is used as an example.

The second access network device may be deployed in a first tracking area, or may be deployed in a second tracking area. A coverage area of the second tracking area partially overlaps that of the first tracking area, or a location of the first tracking area is close to that of the second tracking area. This may also be understood as: The AMF device determines that, near a location of the terminal, there is a second access network device (where the second access network device may also be referred to as a target RAN) that can support the first network slice (requested NSSAI). For example, according to the foregoing example, the requested NSSAI is the S-NSSAI-2, the current RAN is the RAN 1, the AMF device learns that the terminal is currently located in the first tracking area TAI-1, the second tracking area TAI-2 is close to the first tracking area TAI-1, the RAN 2 and the RAN 3 are located in the TAI-2, and the TAI-2 supports the S-NSSAI-2. In this case, the AMF determines that the terminal may request to access the requested NSSAI by using the RAN 2 or the RAN 3. The second access network device is the RAN 2 or the RAN 3.

When the first access network device supports the first network slice, if the AMF device receives the first radio resource information from the first access network device in step 201, optionally, the AMF device may further determine whether the first radio resource information supports the first network slice. It may also be understood that the AMF device may further determine whether the first radio resource information selected by the terminal to access the first access network device is correct. For example, the requested NSSAI is the S-NSSAI-2, that is, the identifier of the first network slice is the S-NSSAI-2. As shown in Table 3, if the first access network device is the RAN 2, that is, current RAN = RAN 2, the AMF device may determine that the TAI-2 where the first access network device is located supports the S-NSSAI-2. In other words, the first access network device supports the S-NSSAI-2. In addition, the first radio resource information selected by the terminal to access the first access network device is the radio resource information 1. However, in the example in Table 4, radio resource information required for accessing a network slice identified by the S-NSSAI-2 is the radio resource information 2, which is different from the radio resource information 1. In this case, the AMF device determines that the first radio resource information selected by the terminal to access the first access network device is incorrect.

It should be noted that in this application, when the first access network device does not support the first network slice, optionally, the AMF device may also determine, based on the foregoing descriptions, whether the first radio resource information supports the first network slice. This is not limited in this application. In other words, it may be understood that regardless of whether the first access network device supports the first network slice, optionally, the AMF device may determine whether the first radio resource information supports the first network slice.

In a possible implementation, as described above, the first access network device may send the first radio resource information together with the NAS request message to the AMF device in step 201.

Optionally, in another possible implementation, after step 201 and before step 202, the method may further include step 202a: The AMF device obtains, from the first access network device, the first radio resource information usable for accessing the first access network device for the terminal.

Specifically, if the AMF device does not receive the first radio resource information from the first access network device in step 201, the AMF device may perform step 202a, so that the AMF device subsequently determines, in step 202, whether the first radio resource information usable for accessing the first access network device for the terminal supports the first network slice that the terminal requests to access.

It should be noted that in this application, the AMF device may perform step 202a regardless of whether the first access network device supports the first network slice.

Optionally, step 203: The AMF device requests to obtain identification information of a policy control function PCF device from an NRF device.

For example, the AMF device invokes a service-based operation Nnrf_NFDiscovery_Request of the NRF device, to request the NRF device to discover the PCF device.

Alternatively, the AMF device may prestore the identification information of the PCF device, and does not need to perform step 203.

Optionally, step 204: The AMF device sends a third message to the PCF device, and correspondingly the PCF device receives the third message from the AMF device. The third message includes at least one of the following: the identifier of the first network slice (requested NSSAI), an identifier of the terminal, and a subscribed RFSP index. If there are a plurality of first network slices, the third message includes the identifiers of the plurality of first network slices. In other words, all identifiers of the network slices included in the requested NSSAI are sent to the PCF device.

For example, the subscribed RFSP index may be obtained by the AMF device from a UDM device, or may be locally configured in the AMF device. The identifier of the terminal may be a subscription permanent identifier (subscription permanent identifier, SUPI).

For example, the AMF device requests to obtain policy information from the PCF device, and invokes a service-based operation Npcf_AMPolicyControl_Creat of the PCF, to send the third message to the PCF device. It may also be understood that the third message is Npcf_AMPolicyControl_Creat.

Optionally, step 205: The PCF device sends a fourth message to the AMF device, and correspondingly the AMF device receives the fourth message from the PCF device. The fourth message includes an authorized RFSP index (authorized RFSP Index). Optionally, the fourth message includes the identifier of the first network slice (requested NSSAI).

The authorized RFSP index is generated based on the first network slice (requested NSSAI). Specifically, the authorized RFSP index is generated based on both the requested NSSAI and the subscribed RFSP index. For ease of differentiation, the authorized RFSP index generated based on the requested NSSAI is defined as a first RFSP index.

It should be noted that step 204 and step 205 describe a method for the AMF device to obtain the first RFSP index by using the PCF device. The AMF device may alternatively obtain the first RFSP index by using another method. For example, the AMF device determines the first RFSP index based on the requested NSSAI and the subscribed RFSP index, or the AMF device obtains the first RFSP index by using another device. This is not limited in this application.

Step 206: The AMF device sends an N2 message (N2 message) to the first access network device (current RAN), and correspondingly the first access network device receives the N2 message from the AMF device. The N2 message includes at least one of the following: first allowed NSSAI, the first RFSP index (the authorized RFSP index generated based on the requested NSSAI), and a NAS response message.

The AMF device notifies the first access network device of an identifier of a network slice allowed to be accessed by the terminal. For ease of description, the network slice that is allowed to be accessed by the terminal and that is indicated to the first access network device is referred to as the first allowed NSSAI, and a network slice that is allowed to be accessed by the terminal and that is indicated to the terminal is referred to as second allowed NSSAI. Generally, the second allowed NSSAI is included in the NAS response message to notify the terminal. S-NSSAI included in the first allowed NSSAI and S-NSSAI included in the second allowed NSSAI may be the same or different. This is not limited in this application.

The first allowed NSSAI, the first RFSP index, and the NAS response message may be sent to the first access network device in one N2 message, or may be separately sent to the first access network device in two or three N2 messages. As described above, for ease of differentiation, the NAS message sent by the terminal to the AMF device is referred to as the NAS request message. The NAS message sent by the AMF device to the terminal is referred to as the NAS response message. In an example, the NAS response message may be a registration response message, and the registration response message may be a registration accept (registration accept) message, or may be a registration reject (registration reject) message.

The AMF may determine the S-NSSAI included in the first allowed NSSAI in the following methods:
(1) In an example, if the first access network device supports a first network slice that the terminal requests to access and the first radio resource information supports the first network slice (that is, the first radio resource information is correctly selected), or if the first access network device supports a first network slice that the terminal requests to access but the first radio resource information does not support the first network slice (that is, the first radio resource information is incorrectly selected), the identifier that is of the network slice allowed to be accessed by the terminal and that is indicated by the AMF to the first access network device is the identifier of the first network slice. To be specific, the S-NSSAI included in the first allowed NSSAI is S-NSSAI supported by the current RAN in the requested NSSAI.

For example, the requested NSSAI is the S-NSSAI-1 plus the S-NSSAI-2, the current RAN is the RAN 1, the RAN 1 is located in the TAI-1, and the TAI-1 supports the S-NSSAI-1 but does not support the S-NSSAI-2. Therefore, the current RAN supports only the S-NSSAI-1 in the requested NSSAI, but does not support the S-NSSAI-2 in the requested NSSAI. In this case, the first allowed NSSAI is the S-NSSAI-1. It may be understood that in this case, regardless of whether the first radio resource information supports the first network slice that the terminal requests to access, the first allowed NSSAI is the S-NSSAI-1.

(2) In an example, if the first access network device does not support any first network slice (that is, the current RAN supports none of the S-NSSAI in the requested NSSAI), regardless of whether the first radio resource information supports the first network slice, the AMF notifies the first access network device that an identifier of the S-NSSAI included in the first allowed NSSAI allowed to be accessed by the terminal is an identifier of a default network slice default S-NSSAI in a subscribed network slice of the terminal.

For example, in the foregoing example, the requested NSSAI is the S-NSSAI-2, the current RAN is the RAN 1, the RAN 1 is located in the TAI-1, and the TAI-1 supports the S-NSSAI-1 but does not support the S-NSSAI-2. Therefore, if the current RAN does not support the requested NSSAI, the first allowed NSSAI is the default S-NSSAI. It may be understood that in this case, if the first access network device does not support any first network slice, the first allowed NSSAI is the default S-NSSAI.

For example, the NAS response message may include the second allowed NSSAI, and S-NSSAI included in the second allowed NSSAI included in the NAS response message is the same as S-NSSAI included in the requested NSSAI. To be specific, the identifier of the network slice that is allowed to be accessed by the terminal and that is indicated to the terminal is the identifier of the first network slice requested by the terminal. In other words, the second allowed NSSAI sent to the terminal is the requested NSSAI. For example, if the requested NSSAI is the S-NSSAI-2, the second allowed NSSAI is the S-NSSAI-2. For another example, the requested NSSAI is the S-NSSAI-1 plus the S-NSSAI-2, and the second allowed NSSAI is the S-NSSAI-1 plus the S-NSSAI-2. In other words, for the foregoing four cases, if the first access network device supports the first network slice that the terminal requests to access and the first radio resource information supports the first network slice (that is, the first radio resource information is correctly selected), or if the first access network device supports the first network slice that the terminal requests to access but the first radio resource information does not support the first network slice (that is, the first radio resource information is incorrectly selected), or if the first access network device does not support any first network slice (that is, the current RAN supports none of the S-NSSAI in the requested NSSAI) but the first radio resource information supports the first network slice (that is, the first radio resource information is correctly selected), or if the first access network device does not support any first network slice (that is, the current RAN supports none of the S-NSSAI in the requested NSSAI) and the first radio resource information does not support the first network slice (that is, the first radio resource information is incorrectly selected), the identifier that is of the network slice allowed to be accessed by the terminal and that is indicated to the terminal is the identifier of the first network slice requested by the terminal. In other words, the second allowed NSSAI sent to the terminal is the requested NSSAI.

In the foregoing descriptions, when the first access network device does not support any first network slice, the network slice that is allowed to be accessed by the terminal and that is sent to the first access network device is the default network slice, and the network slice that is allowed to be accessed by the terminal and that is sent to the terminal is the first network slice. In other words, the first allowed NSSAI sent by the AMF device to the first access network device is different from the identifier of the network slice that is included in the second allowed NSSAI and that is sent to the terminal. In this way, it can be ensured that the first access network device supports the first allowed NSSAI, and the terminal is allowed to access the first network slice (that is, the S-NSSAI included in the second allowed NSSAI is the same as the S-NSSAI included in the requested NSSAI).

In an example, the N2 message includes first indication information (indication), and the first indication information may indicate at least one of the following:
indicating the terminal to release a wireless connection; and
indicating the terminal to initiate a registration procedure after entering an idle (idle) mode.

Optionally, the first indication information may further indicate any one of the following:
indicating that the first access network device currently accessed by the terminal does not support the first network slice, where the indication content is applicable to the case in which the first access network device does not support the first network slice;
indicating that the first radio resource information selected by the terminal to access the first access network device does not support the first network slice, where the indication content is applicable to the case in which the first radio resource information selected by the terminal to access the first access network device does not support the first network slice; and
indicating that the first radio resource information selected by the terminal to access the first access network device is incorrect, where the indication content is applicable to the case in which the first radio resource information selected by the terminal to access the first access network device does not support the first network slice.

It should be noted that the first indication information may indicate only any one of the foregoing three items: indicating that the first access network device currently accessed by the terminal does not support the first network slice, where the indication content is applicable to the case in which the first access network device does not support the first network slice; indicating that the first radio resource information selected by the terminal to access the first access network device does not support the first network slice; and indicating that the first radio resource information selected by the terminal to access the first access network device is incorrect. In addition, the first indication information may further indicate other content. This is not limited herein in this application. After receiving the first indication information, the terminal releases the wireless connection, and initiates the registration procedure after entering the idle (idle) mode. Therefore, it may be understood that the first indication information has a function of indicating the terminal to release the wireless connection or indicating the terminal to initiate the registration procedure after entering the idle mode.

Optionally, the first indication information may further indicate the terminal to access the first network slice based on second radio resource information, where the first network slice is associated with the second radio resource information. The second radio resource information herein may be a first frequency band priority list described below.

The first indication information is for indicating the terminal. In this case, in an example, the first indication information may be in the NAS response message, and the first access network device directly sends the NAS response message to the terminal without processing the NAS response message. In another example, the first indication information may not be in the NAS response message, and the first access network device may send the first indication information to the terminal.

Step 207: The first access network device sends the NAS response message (for example, the registration response message) to the terminal, and correspondingly the terminal receives the NAS response message sent by the first access network device. Optionally, in this step, the first access network device may further send first frequency band priority list information to the terminal.

Specifically, the first frequency band priority list information and the NAS response message may be sent to the terminal in one message, or may be separately sent to the terminal in two messages. For example, the first access network device sends a radio resource control (radio resource control, RRC) message to the terminal, where the RRC message carries the first frequency band priority list information and the NAS response message.

If the first indication information in step 206 is not in the NAS response message, the first access network device may further send the first indication information in step 206 to the terminal.

In an example, the first access network device may locally configure a correspondence between a subscriber profile identifier for a RAT/frequency selection priority (subscriber profile ID for RAT/frequency selection priority, SPID) and frequency band priority list information, or a correspondence between an RFSP index and frequency band priority list information. The first access network device may determine the corresponding first frequency band priority list information based on the first RFSP index carried in the N2 message. In this application, the frequency band priority list information may also be referred to as frequency band information, a frequency band list, frequency band priority information, a frequency band priority list. frequency information, a frequency list, frequency priority information, a frequency priority list, or the like.

The first access network device may actively send the first frequency band priority list information to the terminal. Alternatively, the terminal may request to obtain the first frequency band priority list information, and then the first access network device sends the first frequency band priority list information to the terminal. Optionally, the first access network device first sends the NAS response message to the terminal, and then the terminal sends a request message to the first access network device. The request message carries the identifier of the first network slice (that is, second allowed NSSAI = requested NSSAI). The request message requests to obtain the second radio resource information (first frequency band priority list information). After receiving the request message, the first access network device sends the first frequency band priority list to the terminal.

It should be noted that, in this application, an SPID on a wireless side and an RFSP index on a core network side refer to a same concept. In this application, for consistency, both the SPID on the wireless side and the RFSP index on the core network side are referred to as RFSP indexes.

Table 5 shows frequency band priority list information for the terminal to access a network slice identified by S-NSSAI-2.

**Table 5**

| Identifier of a network slice | Frequency band | Priority | Access network device that supports the frequency band |
|---|---|---|---|
| S-NSSAI-2 | Frequency band 2, for example, n77 | High | RAN 2 |
| | Frequency band 3, for example, n38 | Low | RAN 3 |

In the example of Table 5, the identifier of the network slice is S-NSSAI-2, frequency bands that support S-NSSAI-2 include the frequency band 2 and the frequency band 3 (where the frequency band may also be referred to as radio resource information), the frequency band 2 has a high priority, and the frequency band 3 has a low priority. An access network device that supports the frequency band 2 is the RAN 2, and an access network device that supports the frequency band 3 is the RAN 3. It may be understood that the terminal preferentially accesses the RAN 2 by using the frequency band 2. If the terminal fails to access the RAN 2, the terminal accesses the RAN 3 by using the frequency band 3.

Step 208: The terminal initiates a wireless connection release (AN release) procedure based on the first indication information, and after the procedure, an RRC connection between the terminal and the first access network device is released, and the terminal enters the idle idle mode.

If the first access network device does not send the first frequency band priority list information to the terminal in step 207, the first access network device sends the first frequency band priority list information to the terminal in step 208. Specifically, the terminal sends an RRC message to the first access network device, and the first access network device sends the first frequency band priority list information to the UE by using an RRC message.

Step 209: The terminal selects a target access network device based on the obtained first frequency band priority list information, and initiates the registration procedure (which is a registration procedure initiated the second time). In other words, the terminal sends the registration request message again, where the S-NSSAI included in the requested NSSAI carried in the registration request message is the first network slice in step 201.

A method for the terminal to select the target access network device based on the obtained first frequency band priority list information may be implemented according to a cell reselection mechanism in the current technologies. Details are not described in this application.

For the terminal, during selection of the target access network device, the target access network device selected by the terminal based on the first frequency band priority list information supports the first network slice. In addition, radio resource information used by the terminal to access the target access network device is also supported by the first network slice. In other words, it may be understood that when the first access network device does not support the first network slice, or when the first radio resource information used to access the first access network device does not support the first network slice, in either case, after performing selection based on the first frequency band priority list information, the terminal may finally access the target access network device by using the radio resource information corresponding to the first network slice.

In an example, the first access network device does not support the first network slice in step 201, and the target access network device (target RAN) may be a second access network device different from the first accessed network device. Because the target access network device is selected based on the first frequency band priority list information, and the first frequency band priority list information is determined based on the first network slice in step 201, the second access network device supports the first network slice in step 201, and a frequency band for accessing the second access network device also supports the first network slice in step 201. For example, the identifier of the first network slice that the terminal requests to access is S-NSSAI-2, and the first access network device, namely, the current RAN, is the RAN 1. It can be learned from Table 5 that the access network device that supports the first network slice does not include the RAN 1. The terminal may select, based on the frequency band priority list information, an access network device that supports the first network slice for access. Because the frequency band 2 has a high priority, the terminal may select an access network device that supports the frequency band 2 for access. For example, the terminal may access the RAN 2 by using the frequency band 2.

In another example, the first access network device supports the first network slice in step 201, and the first radio resource information (for example, a frequency band) selected by the terminal to access the first access network device does not support the first network slice in step 201. In this case, the target access network device may be the first access network device, and the terminal accesses the first access network device by using the second radio resource information. The second radio resource information supports the first network slice in step 201. For example, the identifier of the first network slice that the terminal requests to access is S-NSSAI-2, and the first access network device, namely, the current RAN, is the RAN 2. The first access network device supports the first network slice. If the first access network device, namely, the RAN 2, supports access of the frequency band 1 and the frequency band 2, the terminal currently uses the frequency band 1 (first radio resource information) to access the first access network device, namely, the RAN 2. It can be learned from Table 5 that the first access network device supports the first network slice, and the frequency band 1 does not support the first network slice. The terminal may determine, based on the frequency band priority list information, to still access the first access network device, and access the first access network device, namely, the RAN 2 by using the frequency band 2 with a high priority.

In this case, the terminal may access the target access network device based on the first frequency band priority list (which may be understood as the second radio resource information in the first indication information), successfully register with a network by using the target access network device, and access the network slice corresponding to the requested NSSAI carried in a registration request message initiated by the terminal the second time, that is, access the first network slice.

In the current technologies, a terminal blindly selects an access network device, and consequently the terminal cannot access a requested first network slice. In this embodiment, the AMF device determines the first RFSP index based on the first network slice, and the terminal obtains, based on the first RFSP index, the first frequency band priority list information that satisfies the first network slice, and accesses the target access network device based on the first frequency band priority list information. This can ensure that the terminal accesses a first network slice by using the target access network device, and can also improve a success rate and efficiency of accessing a network slice by the terminal.

In another embodiment, the NAS response message included in the N2 message sent by the AMF device to the first access network device in step 206 is a registration reject (registration reject) message, and the first indication information included in the registration reject message may also be referred to as a failure cause value (cause value). The failure cause value can be any of the following:
The first access network device currently accessed by the terminal does not support the first network slice, where the indication content is applicable to the case in which the first access network device does not support the first network slice;
the first radio resource information selected by the terminal to access the first access network device does not support the first network slice, where the indication content is applicable to the case in which the first radio resource information selected by the terminal to access the first access network device does not support the first network slice; and
the first radio resource information selected by the terminal to access the first access network device is incorrect, where the indication content is applicable to the case in which the first radio resource information selected by the terminal to access the first access network device does not support the first network slice.

Correspondingly, the NAS response message sent by the first access network device to the terminal in step 207 is the registration reject message.

The terminal learns that the registration fails, learns a cause of the registration failure based on a failure cause value included in the registration reject message, and further performs step 208 and step 209.

In the current technologies, because a terminal blindly selects an access network device, the terminal cannot access a requested first network slice. In this embodiment, a core network rejects a registration request of the terminal, notifies the terminal of a cause value of a current registration failure, and triggers the terminal to reselect a target access network device and access the network again.

Optionally, in this example, the N2 message in step 206 may not include the first allowed NSSAI indicated to the first access network device.

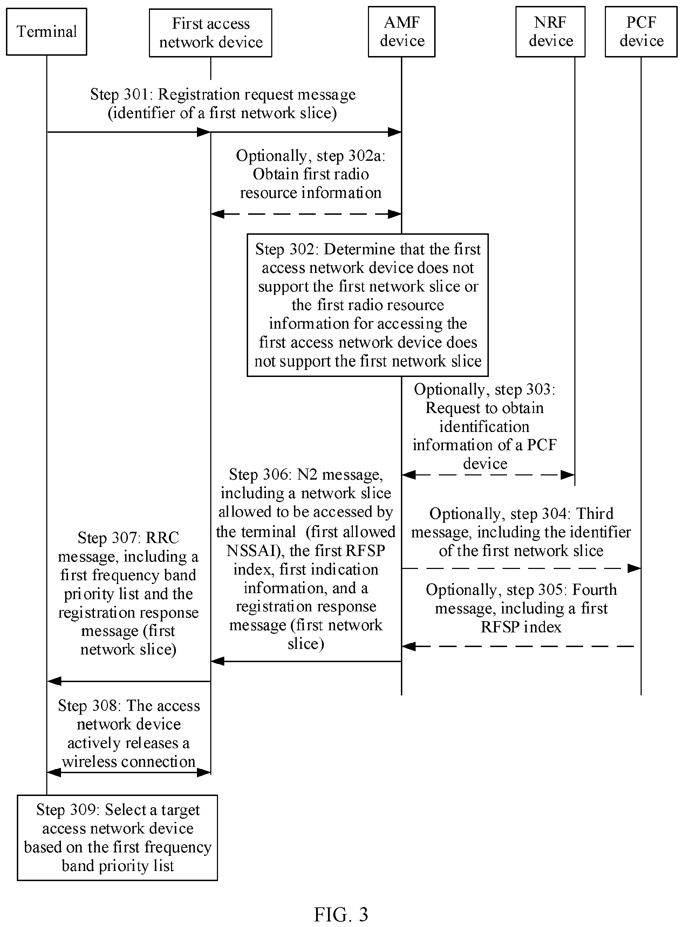

As shown in FIG. 3, a schematic diagram of another communication procedure is provided. A difference between an example in FIG. 3 and the example in FIG. 2 lies in: in the example in FIG. 2, the first indication information in step 206 is for indicating the terminal, the first indication information is to be sent to the terminal, the first indication information is usually in the NAS response message, and the terminal actively releases the wireless connection; in the example in FIG. 3, the first indication information in step 306 is for indicating the first access network device, the first indication information is to be sent to the first access network device, the first indication information is not in the NAS response message, and the first access network device actively releases the wireless connection. Other technical details of the example in FIG. 3 are the same as those of the example in FIG. 2. Details are not repeated.

Step 301 to step 305 are the same as step 201 to step 205.

Step 306: The AMF device sends an N2 message to the first access network device (current RAN), and correspondingly the first access network device receives the N2 message sent by the AMF device. The N2 message includes at least one of the following: first allowed NSSAI, a first RFSP index, a NAS response message, and first indication (indication) information.

The first indication information may indicate the first access network device to release the wireless connection. Specifically, the first access network device releases the wireless connection after sending the NAS response message (for example, a registration response message) to the terminal, or the first access network device releases the wireless connection after sending second radio resource information to the terminal. The second radio resource information may be first frequency band priority list information corresponding to the first RFSP index.

Optionally, the first indication information may further indicate any one of the following:
indicating that the first access network device does not support the first network slice, where the indication content is applicable to the case in which the first access network device does not support the first network slice;
indicating that the first radio resource information selected by the terminal to access the first access network device does not support the first network slice, where the indication content is applicable to the case in which the first radio resource information selected by the terminal to access the first access network device does not support the first network slice; and
indicating that the first radio resource information selected by the terminal to access the first access network device is incorrect, where the indication content is applicable to the case in which the first radio resource information selected by the terminal to access the first access network device does not support the first network slice.

It should be noted that the first indication information may indicate only any one of the foregoing three items: indicating that the first access network device does not support the first network slice; indicating that the first radio resource information selected by the terminal to access the first access network device does not support the first network slice; and indicating that the first radio resource information selected by the terminal to access the first access network device is incorrect. In addition, the first indication information may further indicate other content. This is not limited herein in this application. After receiving the first indication information, the first access network device releases the wireless connection. Therefore, it may be understood that the first indication information has a function of indicating the first access network device to release the wireless connection.

Step 307: The first access network device sends the NAS response message (for example, the registration response message) to the terminal, and correspondingly the terminal receives the NAS response message sent by the first access network device. Because the NAS response message in step 306 does not include the first indication information, the NAS response message in step 307 does not include the first indication information, either.

Optionally, in step 307, the first access network device may further send the first frequency band priority list information to the terminal. Specifically, the first access network device may actively send the first frequency band priority list information to the terminal. Alternatively, the terminal may request to obtain the first frequency band priority list information and then the first access network device sends the first frequency band priority list information to the terminal. Optionally, the first access network device first sends the NAS response message to the terminal, and then the terminal sends a request message to the first access network device. The request message carries the identifier of the first network slice (that is, second allowed NSSAI = requested NSSAI). The request message requests to obtain the second radio resource information (first frequency band priority list information). After receiving the request message, the first access network device sends the first frequency band priority list to the terminal.

Step 308: The first access network device may initiate a wireless connection release (AN release) procedure based on the first indication information. After the procedure, an RRC link between the current access network device and the terminal is released, and the terminal enters the idle idle mode.

If the first access network device does not send the first frequency band priority list information to the terminal in step 307, the first access network device sends the first frequency band priority list information to the terminal in step 308. Specifically, the first access network device sends the first frequency band priority list information to the UE by using an RRC message.

Step 309 is the same as step 209.

In the foregoing embodiment, regardless of whether the first access network device supports the first network slice and whether the first radio resource information supports the first network slice, the second allowed NSSAI is used to notify the terminal, that is, the second allowed NSSAI is the requested NSSAI. The foregoing describes a technical solution in which the terminal accesses a first network slice by using first frequency band priority list information associated with the first network slice.

The following describes another technical solution: A network side may deliver, to the terminal, third frequency band priority list information associated with a network slice, namely, rejected NSSAI, that rejects access of the terminal, and second frequency band priority list information associated with second allowed NSSAI that allows access of the terminal. The terminal may choose, based on a requirement of the terminal, whether to access the network slice included in the rejected NSSAI or the network slice included in the second allowed NSSAI.

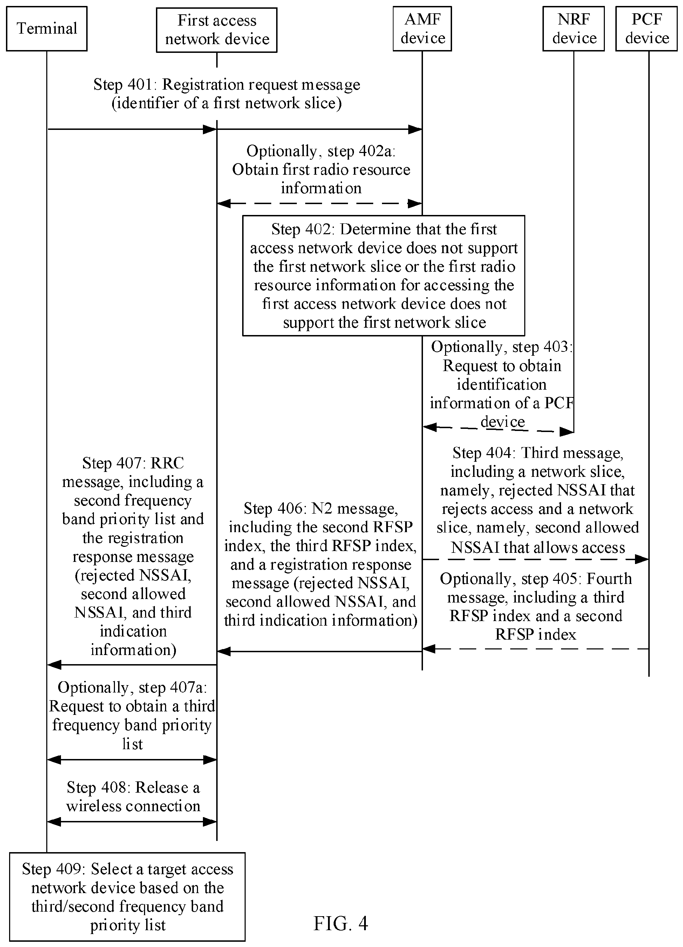

FIG. 4 is a schematic diagram of another communication process according to an embodiment of this application. The process specifically includes the following steps.

Step 401 to step 403 are the same as step 201 to step 203.

Optionally, step 404: The AMF device sends a third message to a policy control function PCF device, and correspondingly the PCF device receives the third message from the AMF device. The third message includes at least one of the following: the rejected NSSAI notifying the terminal that the network slice rejects access of the terminal, the second allowed NSSAI notifying the terminal that access of the terminal is allowed, an identifier of the terminal, and a subscribed RFSP index. The rejected NSSAI herein literally indicates a network slice, where the AMF device rejects access of the terminal to the network slice. Actually, it is merely intended to indicate that the first access network device does not support the network slice, instead of limiting access of the terminal to the network slice. The rejected NSSAI may also be replaced with another name. This is not limited.

The AMF may determine the S-NSSAI included in the second allowed NSSAI in the following methods:
(1) In an example, if the first access network device supports a first network slice that the terminal requests to access, regardless of whether the first radio resource information supports the first network slice, the identifier that is of the network slice allowed to be accessed by the terminal and that is indicated by the AMF to the terminal is the identifier of the first network slice. To be specific, the S-NSSAI included in the second allowed NSSAI is S-NSSAI supported by the current RAN in the requested NSSAI.

For example, the requested NSSAI is the S-NSSAI-1 plus the S-NSSAI-2, the current RAN is the RAN 1, the RAN 1 is located in the TAI-1, and the TAI-1 supports the S-NSSAI-1 but does not support the S-NSSAI-2. Therefore, the current RAN supports only the S-NSSAI-1 in the requested NSSAI, but does not support the S-NSSAI-2 in the requested NSSAI. In this case, the second allowed NSSAI is the S-NSSAI-1.

(2) In an example, if the first access network device does not support any first network slice that the terminal requests to access, regardless of whether the first radio resource information supports the first network slice, the identifier that is of the network slice allowed to be accessed by the terminal and that is indicated by the AMF to the terminal is an identifier of a default network slice in a network slice to which the terminal subscribes. To be specific, the second allowed NSSAI is the default S-NSSAI.

For example, the requested NSSAI is the S-NSSAI-2, the current RAN is the RAN 1, the RAN 1 is located in the TAI-1, and the TAI-1 supports the S-NSSAI-1 but does not support the S-NSSAI-2. Therefore, if the current RAN does not support the S-NSSAI-2 in the requested NSSAI, the second allowed NSSAI is the default S-NSSAI.

The AMF may determine the S-NSSAI included in the rejected NSSAI in the following methods:
In an example, if the first access network device does not support one or more first network slices that the terminal requests to access, regardless of whether the first radio resource information supports the first network slice, the identifier that is of the network slice that rejects access of the terminal and that is indicated by the AMF to the terminal is the identifier of the first network slice. To be specific, the S-NSSAI included in the rejected NSSAI is S-NSSAI not supported by the current RAN in the requested NSSAI.

For example, the requested NSSAI is the S-NSSAI-1 plus the S-NSSAI-2, the current RAN is the RAN 1, the RAN 1 is located in the TAI-1, and the TAI-1 supports the S-NSSAI-1 but does not support the S-NSSAI-2. Therefore, the current RAN supports only the S-NSSAI-1 in the requested NSSAI but does not support the S-NSSAI-2 in the requested NSSAI. In this case, the rejected NSSAI is the S-NSSAI-2.

For example, the requested NSSAI is the S-NSSAI-2, the current RAN is the RAN 1, the RAN 1 is located in the TAI-1, and the TAI-1 supports the S-NSSAI-1 but does not support the S-NSSAI-2. Therefore, if the current RAN does not support the S-NSSAI-2 in the requested NSSAI, the rejected NSSAI is the S-NSSAI-2.

In conclusion, when the first access network device does not support a first network slice indicated by requested NSSAI, an identifier of the unsupported first network slice may also be indicated to the terminal by using rejected NSSAI. In other words, the S-NSSAI included in the rejected NSSAI included in the third message belongs to the requested NSSAI. When the first access network device does not support any first network slice, the identifier that is of the network slice allowed to be accessed by the terminal, that is included in the second allowed NSSAI, and that is indicated by the first access network device to the terminal is an identifier of a default network slice in a network slice to which the terminal subscribes. To be specific, the second allowed NSSAI is the default S-NSSAI. When the first access network device supports requested NSSAI of a first network slice, an identifier of the supported first network slice may also be indicated to the terminal by using the second allowed NSSAI. In other words, the S-NSSAI included in the second allowed NSSAI included in the third message belongs to the requested NSSAI.

In another example, the foregoing step 404 may be replaced with the following: The AMF device may send two third messages to a PCF device, where the two third messages respectively include an identifier of a network slice (that is, an identifier of a first network slice not supported by a first access network device) included in rejected NSSAI and an identifier of a network slice (for example, an identifier of a first network slice supported by the first access network device or an identifier of a default network slice) included in second allowed NSSAI.

Optionally, step 405: The PCF device sends a fourth message to the AMF device, and correspondingly the AMF device receives the fourth message from the PCF device. The fourth message includes a third RFSP index and a second RFSP index.

The third RFSP index is generated based on the rejected NSSAI. Specifically, the third RFSP index is generated based on both the rejected NSSAI and the subscribed RFSP index. The third RFSP index may also be referred to as a first authorized RFSP index or an authorized RFSP index. The second RFSP index is generated based on the second allowed NSSAI. Specifically, the second RFSP index is generated based on both the second allowed NSSAI and the subscribed RFSP Index. The second RFSP index may also be referred to as a second authorized RFSP index or an authorized RFSP index. In the examples in FIG. 2 and FIG. 3, the first RFSP index is generated based on the requested NSSAI, although the second allowed NSSAI is the requested NSSAI when the terminal is notified of. However, actually, content included in the second allowed NSSAI in the examples in FIG. 2 and FIG. 3 may be different from content included in the second allowed NSSAI in the example in FIG. 4. Therefore, a determined RFSP index is also distinguished by using the first RFSP index and the second RFSP index.

In another example, the foregoing step 405 may be replaced with the following: The PCF device sends two fourth messages to the AMF device, where the two fourth messages respectively include a third RFSP index and a second RFSP index.

It should be noted that step 404 and step 405 describe a method for the AMF device to obtain the third RFSP index and the second authorized RFSP index by using the PCF device. The AMF device may alternatively obtain the third RFSP index and the second authorized RFSP index by using another method. For example, the AMF device determines the third RFSP index based on the rejected NSSAI and the subscribed RFSP index, or the AMF device obtains the third RFSP index by using another device. This is not limited in this application. For example, the AMF device determines the second RFSP index based on the second allowed NSSAI and the subscribed RFSP index, or the AMF device obtains the second RFSP index by using another device. This is not limited in this application.

Step 406: The AMF device sends an N2 message (N2 message) to the first access network device (current RAN), and correspondingly the first access network device receives the N2 message from the AMF device. The N2 message includes the second RFSP index, the third RFSP index, and the NAS response message.

The NAS response message includes one or more of the identifier of the network slice included in the rejected NSSAI, the identifier of the network slice included in the second allowed NSSAI, and third indication information. The third indication information indicates a manner for the terminal to access the network slice.

The information in the N2 message described above may be sent to the first access network device in one message, or may be sent to the first access network device in a plurality of messages.

In addition, optionally, the AMF device may further indicate a correspondence between the third RFSP index and the rejected NSSAI, and indicate a correspondence between the second RFSP index and the second allowed NSSAI, so that the first access network device knows a network slice based on which an RFSP index is determined.

The third indication information includes but is not limited to indicating at least one of the following:
indicating the terminal to request, from the first access network device, second radio resource information (for example, third frequency band priority list information corresponding to the third RFSP index) corresponding to a first network slice if the terminal accesses a network slice (the first network slice not supported by the first access network device) included in the rejected NSSAI; optionally, further indicating the terminal to release a wireless connection after requesting the second radio resource information; and
indicating the terminal to request, from the first access network device, second radio resource information (for example, third frequency band priority list information corresponding to a third RFSP index) corresponding to a network slice (a first network slice not supported by the first access network device) included in the rejected NSSAI.

Optionally, the NAS response message in step 406 may also include the first indication information in step 206 in FIG. 2.

Then, the first access network device may send the following information to the terminal: second frequency band priority list information, the third frequency band priority list information, the identifier of the network slice included in the rejected NSSAI, and the identifier of the network slice included in the second allowed NSSAI. The third frequency band priority list information is used by the terminal to access a network slice included in the Rejected NSSAI, and the second frequency band priority list information is used by the terminal to access a network slice included in the second allowed NSSAI.

Optionally, the first access network device may further send third indication information to the terminal.

In an example, in step 407 shown in FIG. 4, the first access network device sends the second frequency band priority list information and the NAS response message (for example, a registration response message) to the terminal. Correspondingly, the terminal receives the second frequency band priority list information and/or the NAS response message sent by the first access network device.

The second frequency band priority list information and the NAS response message may be sent to the terminal in one message, or may be separately sent to the terminal in two messages. For example, the first access network device sends an RRC message to the terminal, where the RRC message carries the second frequency band priority list information and/or the NAS response message.

Optionally, in step 407a, the terminal may determine, based on the third indication information, to obtain the second radio resource information from the first access network device. Specifically, the terminal may further send a request message to the first access network device, where the request message carries the identifier (Rejected NSSAI) of the first network slice, and the request message requests to obtain the second radio resource information. The second radio resource information is, for example, the third frequency band priority list information corresponding to the third RFSP index.

The terminal may determine, based on an actual requirement of the terminal, whether to obtain the second radio resource information from the first access network device. If necessary, the terminal may send the first network slice (Rejected NSSAI) to the first access network device (current RAN) by using an RRC message, and the current RAN returns the third frequency band priority list information to the terminal.

Alternatively, when the terminal does not perform step 407a, the first access network device may send the third frequency band priority list information to the terminal. For example, the third frequency band priority list information, the second frequency band priority list information, and the NAS response message may be sent to the terminal in one message, or may be separately sent to the terminal in different messages.

Step 408 is the same as step 208: The terminal initiates a wireless connection release (AN release) procedure, and after the procedure, an RRC connection between the first access network device and the terminal is released, and the terminal enters the idle idle mode.

Step 409: The terminal selects a target access network device based on the third frequency band priority list information or the second frequency band priority list information, and accesses the first network slice included in the rejected NSSAI or the network slice included in the second allowed NSSAI.

In an example, the terminal selects the target access network device based on the obtained third frequency band priority list information, and initiates the registration procedure (which is a registration procedure initiated the second time). In other words, the terminal sends the registration request message again, and S-NSSAI included in the requested NSSAI carried in the registration request message is the network slice included in the rejected NSSAI. In this case, the terminal may access the target access network device based on the third frequency band priority list information, successfully register with the network by using the target access network device, and access the network slice corresponding to the requested NSSAI, that is, access the first network slice included in the rejected NSSAI.

In another example, the terminal selects the target access network device based on the obtained second frequency band priority list information, and initiates the registration procedure (which is a registration procedure initiated the second time). In other words, the terminal sends the registration request message again, and S-NSSAI included in the requested NSSAI carried in the registration request message is the network slice included in the second allowed NSSAI. In this case, the terminal may access the target access network device based on the second frequency band priority list information, successfully register with the network by using the target access network device, and access the network slice corresponding to the requested NSSAI carried in a registration request message initiated by the terminal the second time, that is, access the network slice included in the second allowed NSSAI.

Because the terminal blindly selects an access network device, the terminal cannot access a requested first network slice. In this embodiment, the AMF device determines the third RFSP index based on the rejected NSSAI, and determines the second RFSP index based on the second allowed NSSAI. The terminal obtains, based on the third RFSP index, third frequency band priority list information of an unsupported first network slice, and/or obtains, based on the second RFSP index, second frequency band priority list information of a network slice included in the second allowed NSSAI, and accesses the target access network device based on the third frequency band priority list information or the second frequency band priority list information. This can ensure that the terminal accesses, by using the target access network device, the network slice included in the rejected NSSAI or the second allowed NSSAI, and can also improve a success rate and efficiency of accessing the network slice by the terminal.

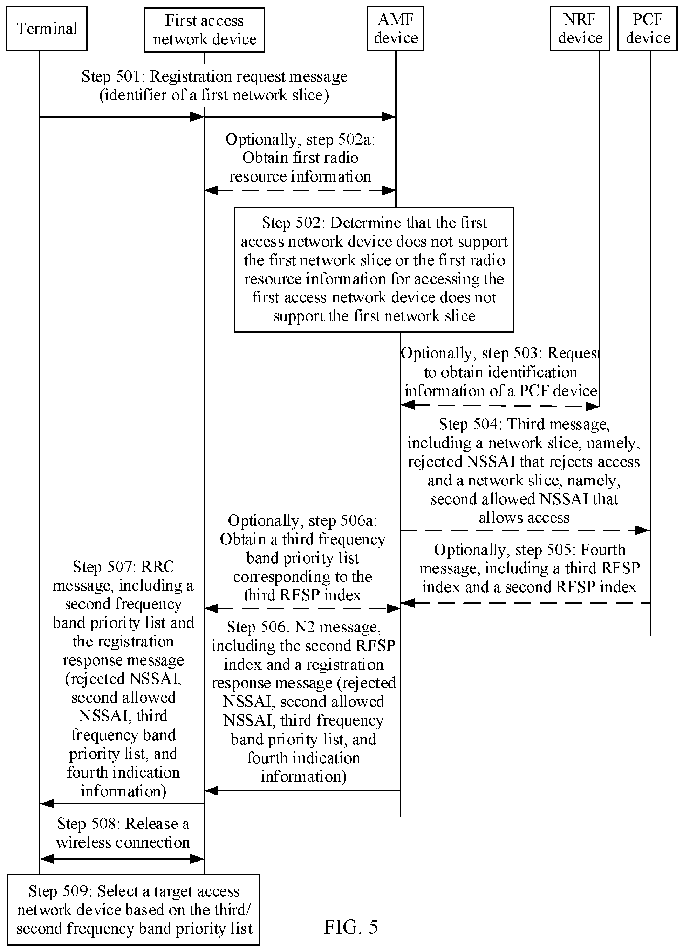

As shown in FIG. 5, a communication method is provided. The communication method includes the following steps. A difference between an example in FIG. 5 and the example in FIG. 4 lies in: The NAS response message sent by the AMF device to the terminal includes the third frequency band priority list information corresponding to the rejected NSSAI, the terminal does not need to obtain the third frequency band priority list information from the AMF device, and content of the third indication information slightly changes. In the example in FIG. 5, indication information is referred to as fourth indication information.

Step 501 to step 505 are the same as step 401 to step 405. Details are not repeated.

Step 506: The AMF device sends an N2 message to the first access network device (current RAN), and correspondingly the first access network device receives the N2 message from the AMF device. The N2 message includes at least one of the following: a second RFSP index (an authorized RFSP index generated based on the second allowed NSSAI) and a NAS response message.

The NAS response message includes at least one of the following: an identifier of a network slice included in rejected NSSAI, an identifier of a network slice included in the second allowed NSSAI, third frequency band priority list information determined based on a third RFSP index (an authorized RFSP Index generated based on the rejected NSSAI), and fourth indication information.

The fourth indication information includes but is not limited to indicating at least one of the following:
indicating the terminal to select a target access network device based on the third frequency band priority list information in the NAS response message if the terminal accesses a network slice (a first network slice not supported by the first access network device) included in the rejected NSSAI;
indicating, to the terminal, that the third frequency band priority list information included in the NAS response message supports a network slice (the first network slice not supported by the first access network device) included in the rejected NSSAI; and
indicating the terminal to select the target access network device based on the third frequency band priority list information in the NAS response message.

Optionally, the NAS response message in step 506 may also include the first indication information in step 206 in FIG. 2.

Optionally, frequency band priority list information corresponding to an RFSP index may be configured for the AMF device. The AMF device may determine, based on the configuration of the AMF device, the third frequency band priority list information corresponding to the third RFSP index.

In an example, the AMF device may store a correspondence between an RFSP index and frequency band priority list information, and the AMF device determines, based on the configuration of the AMF device, the third frequency band priority list information corresponding to the third RFSP index.

Optionally, in another example, before step 506, the method further includes step 506a: The AMF device obtains, from the first access network device, the third frequency band priority list information corresponding to the third RFSP index. Specifically, the following steps may be included.

The AMF device sends a frequency request (frequency request) to the first access network device. Correspondingly, the first access network device receives the frequency request (frequency request) sent by the AMF device, where the frequency request includes the third RFSP index.

The first access network device determines, based on the locally configured correspondence between an RFSP index and frequency band priority list information, the third frequency band priority list information corresponding to the third RFSP index.

The first access network device sends a frequency response (frequency response) to the AMF device. Correspondingly, the AMF device receives the frequency response (frequency response) sent by the first access network device. The frequency response includes the third frequency band priority list information corresponding to the third RFSP index.

The frequency request (frequency request) and the frequency response (frequency response) herein are merely names of messages, and may also be replaced with other names such as a frequency band information obtaining request and a frequency band information obtaining response.

Step 507: The first access network device sends second frequency band priority list information and/or a NAS response message (for example, a registration response message) to the terminal. Correspondingly, the terminal receives the second frequency band priority list information and/or the NAS response message sent by the first access network device.

Step 508 is the same as step 408, and step 509 is the same as step 409.

In conclusion, because the terminal blindly selects an access network device, the terminal cannot access a requested first network slice. In this embodiment, the AMF device determines the third RFSP index based on the rejected NSSAI, and determines the second RFSP index based on the second allowed NSSAI. The terminal obtains, based on the third RFSP index, third frequency band priority list information of an unsupported first network slice, and/or obtains, based on the second RFSP index, second frequency band priority list information of a network slice included in the second allowed NSSAI, and accesses the target access network device based on the third frequency band priority list information or the second frequency band priority list information. This can ensure that the terminal accesses, by using the target access network device, the network slice included in the rejected NSSAI or the second allowed NSSAI, and can also improve a success rate and efficiency of accessing the network slice by the terminal.

In another example of this application, the N2 message sent by the AMF device to the first access network device includes a NAS response message (for example, a registration response message), and the NAS response message includes an identifier of a network slice included in rejected NSSAI, an identifier of a network slice included in the second allowed NSSAI, third frequency band priority list information corresponding to a third RFSP index, and second frequency band priority list information corresponding to a second RFSP index. In this case, when sending the NAS response message to the terminal, the first access network device may no longer need to send, to the terminal, the second frequency band priority list information corresponding to the second RFSP index. The AMF device may locally configure the second frequency band priority list information corresponding to the second RFSP index. Alternatively, the AMF device may request, from the first access network device, the second frequency band priority list information corresponding to the second RFSP index. A principle of a specific process is the same as that of step 506a. Details are not repeated.

In another example of this application, the N2 message sent by the AMF device to the first access network device includes a third RFSP index and a NAS response message (for example, a registration response message). The NAS response message includes an identifier of a network slice included in rejected NSSAI, an identifier of a network slice included in second allowed NSSAI, and second frequency band priority list information corresponding to a second RFSP index. Optionally, the third indication information in step 406 may be further included. In this case, the AMF device may locally configure the second frequency band priority list information corresponding to the second RFSP index. Alternatively, the AMF device may request, from the first access network device, the second frequency band priority list information corresponding to the second RFSP index. A principle of a specific process is the same as that of step 506a. Details are not repeated. When sending the NAS response message to the terminal, the first access network device may actively send the second frequency band priority list information corresponding to the RFSP index to the terminal, or may send the third frequency band priority list information to the terminal after a request of the terminal is waited for.

The following further describes a communication method applied to an AMF device.

First, the AMF device receives a first message from a terminal via a first access network device, where the first message includes an identifier of a first network slice that the terminal requests to access. For this process, refer to the foregoing step 201, step 301, step 401, and step 501. The first message may alternatively be a NAS request message, and may be specifically a registration request message. Other repeated parts are not described again.

Then, the AMF device determines that the first access network device does not support the first network slice. For this process, refer to the foregoing step 202, step 302, step 402, and step 502. Repeated parts are not described again.

Then, the AMF device sends a second message to a first communication device, where the second message includes second radio resource information, the second radio resource information is usable for selecting a second access network device for the terminal, the second access network device supports the first network slice, and the first communication device is the first access network device or the terminal. For a process in which the AMF device sends the second message to the first communication device, refer to the foregoing step 206, step 306, step 406, and step 506.

When the first communication device is the first access network device, the second radio resource information may be an RFSP index. The RFSP index may be specifically the first RFSP index in the examples in FIG. 2 and FIG. 3. For details, refer to the first RFSP index in step 206 and step 306. The first access network device may determine first frequency band priority list information corresponding to a first RFSP index, and send the first frequency band priority list information to the terminal. For a process in which the first access network device sends the first frequency band priority list information to the terminal, refer to the foregoing step 207 and step 307. The RFSP index may alternatively be the second RFSP index and the third RFSP index in FIG. 4 and FIG. 5. For details, refer to the second RFSP index and the third RFSP index in step 406 and the second RFSP index in step 506. The first access network device may determine second frequency band priority list information corresponding to the second RFSP index and/or third frequency band priority list information corresponding to the third RFSP index, and send the second frequency band priority list information and/or the third frequency band priority list information to the terminal. For a process in which the first access network device sends the second frequency band priority list information and/or the third frequency band priority list information to the terminal, refer to the foregoing step 407a and step 507. In this case, the second message may be an N2 message.

When the first communication device is the terminal, the second radio resource information may be frequency band priority list information. The frequency band priority list information may be specifically the third frequency band priority list information in the example shown in FIG. 5. For details, refer to the third frequency band priority list information in step 506. The second message may be an N2 message, or may be a NAS response message. The NAS response message may be specifically a registration response message, for example, a registration accept message or a registration reject message.

In an example, the AMF device allows access of the terminal to the first network slice, or the AMF device rejects access of the terminal to the first network slice. For example, the second allowed NSSAI in the registration response message in step 206 and step 306 is requested NSSAI, that is, the first network slice is a network slice that the AMF device allows the terminal to access. In step 406 and step 506, the rejected NSSAI is a first network slice that is in the requested NSSAI and that is not supported by the first access network device, and the second allowed NSSAI may be a first network slice that is in the requested NSSAI and that is supported by the first access network device. It should be noted that the rejected NSSAI herein literally indicates a network slice included in the rejected NSSAI, where the AMF device rejects access of the terminal to the network slice. Actually, it is merely intended to indicate that the first access network device does not support the network slice included in the rejected NSSAI, instead of limiting access of the terminal to the network slice included in the rejected NSSAI.

In an example, the second message further includes first indication information.

When the first communication device is the terminal, the first indication information indicates at least one of the following: indicating the terminal to release a wireless connection; indicating the terminal to initiate a registration procedure after entering an idle mode; indicating that the first access network device currently accessed by the terminal does not support the first network slice; and indicating the terminal to access the first network slice based on the second radio resource information, where the first network slice is associated with the second radio resource information. Refer to the descriptions in step 206.

When the first communication device is the first access network device, the first indication information indicates at least one of the following: indicating the first access network device to release a wireless connection; and indicating that the first access network device does not support the first network slice. Refer to the descriptions in step 306.

In an example, the AMF device sends a third message to a policy control function PCF device, where the third message includes the identifier of the first network slice; and the AMF device receives a fourth message from the PCF device, where the fourth message includes the RFSP index. For this process, refer to the first RFSP index described in step 204, step 205, step 304, and step 305. Details are not repeated. For this process, refer to the second RFSP index and the third RFSP index described in step 404, step 405, step 504, and step 505. Details are not repeated.

The following describes a communication method, applied to an AMF device.

First, the AMF device receives a first message from a terminal via a first access network device, where the first message includes an identifier of a first network slice that the terminal requests to access. For this process, refer to the foregoing step 201, step 301, step 401, and step 501. The first message may alternatively be a NAS request message, and may be specifically a registration request message. Other repeated parts are not described again.

Then, the AMF device determines that first radio resource information selected by the terminal to access the first access network device does not support the first network slice. For this process, refer to the foregoing step 202, step 302, step 402, and step 502. Repeated parts are not described again.

Then, the AMF device sends a second message to a first communication device, where the second message includes second radio resource information, the second radio resource information is usable for accessing the first access network device for the terminal based on the second radio resource information, the first access network device supports the first network slice, and the first communication device is the first access network device or the terminal. For a process in which the AMF device sends the second message to the first communication device, refer to the foregoing step 206, step 306, step 406, and step 506.

When the first communication device is the first access network device, the second radio resource information may be an RFSP index. The RFSP index may be specifically the first RFSP index in the examples in FIG. 2 and FIG. 3. For details, refer to the first RFSP index in step 206 and step 306. The first access network device may determine the first frequency band priority list information corresponding to the first RFSP index, and send the first frequency band priority list information to the terminal. For a process in which the first access network device sends the first frequency band priority list information to the terminal, refer to the foregoing step 207 and step 307. The RFSP index may alternatively be the second RFSP index and the third RFSP index in FIG. 4 and FIG. 5. For details, refer to the second RFSP index and the third RFSP index in step 406 and the second RFSP index in step 506. The first access network device may determine second frequency band priority list information corresponding to the second RFSP index and/or third frequency band priority list information corresponding to the third RFSP index, and send the second frequency band priority list information and/or the third frequency band priority list information to the terminal. For a process in which the first access network device sends the second frequency band priority list information and/or the third frequency band priority list information to the terminal, refer to the foregoing step 407a and step 507. In this case, the second message may be an N2 message.

When the first communication device is the terminal, the second radio resource information may be frequency band priority list information, and the frequency band priority list information may be specifically the third frequency band priority list information in the example in FIG. 5. For details, refer to the third frequency band priority list information in 506. The second message may be an N2 message, or may be a NAS response message. The NAS response message may be specifically a registration response message, for example, a registration accept message or a registration reject message.

In an example, the AMF device receives the first radio resource information from the first access network device. For this process, refer to the foregoing step 202a, step 302a, step 402a, and step 502a. Details are not repeated.

In an example, the AMF device allows access of the terminal to the first network slice, or the AMF device rejects access of the terminal to the first network slice. For example, the second allowed NSSAI in the registration response message in step 206 and step 306 is requested NSSAI, that is, the first network slice is a network slice that the AMF device allows the terminal to access. In step 406 and step 506, the rejected NSSAI is a first network slice that is in the requested NSSAI and that is not supported by the first access network device, and the second allowed NSSAI may be a first network slice that is in the requested NSSAI and that is supported by the first access network device. It should be noted that the rejected NSSAI herein literally indicates a network slice included in the rejected NSSAI, where the AMF device rejects access of the terminal to the network slice. Actually, it is merely intended to indicate that the first access network device does not support the network slice included in the rejected NSSAI, instead of limiting access of the terminal to the network slice included in the rejected NSSAI.

In an example, the second message further includes first indication information.

When the first communication device is the terminal, the first indication information indicates at least one of the following: indicating the terminal to release a wireless connection; indicating the terminal to initiate a registration procedure after entering an idle mode; indicating that first radio resource information selected by the terminal to access the first access network device does not support the first network slice; indicating that the first radio resource information selected by the terminal to access the first access network device is incorrect; and indicating the terminal to access the first network slice based on the second radio resource information, where the first network slice is associated with the second radio resource information. Refer to the descriptions in step 206.

When the first communication device is the first access network device, the first indication information indicates at least one of the following: indicating the first access network device to release a wireless connection; indicating that the first radio resource information selected by the terminal to access the first access network device does not support the first network slice; and indicating that the first radio resource information selected by the terminal to access the first access network device is incorrect. Refer to the descriptions in step 306.

In an example, the AMF device sends a third message to a policy control function PCF device, where the third message includes the first network slice; and the AMF device receives a fourth message from the PCF device, where the fourth message includes the RFSP index. For this process, refer to the first RFSP index described in step 204, step 205, step 304, and step 305. Details are not repeated. For this process, refer to the second RFSP index and the third RFSP index described in step 404, step 405, step 504, and step 505. Details are not repeated.

The following describes a communication method, applied to a terminal.

First, the terminal sends a first message to an AMF device by using a first access network device, where the first message includes an identifier of a first network slice that the terminal requests to access. For this process, refer to the foregoing step 201, step 301, step 401, and step 501. The first message may alternatively be a NAS request message, and may be specifically a registration request message. Other repeated parts are not described again.

Then, the terminal receives second radio resource information, where the second radio resource information is associated with the first network slice, and the second radio resource information may be the first frequency band priority list in step 207 and step 307, or the second frequency band priority list and the third frequency band priority list in step 407, step 407a, and step 507.

Then, the terminal receives first indication information from the AMF device. For details, refer to the first indication information in the NAS response message in the foregoing step 206 and step 207. The second radio resource information and the first indication information may be received in a same message, or may be received in different messages.

The first indication information indicates at least one of the following: indicating the terminal to release a wireless connection; indicating the terminal to initiate a registration procedure after entering an idle mode; indicating that the first access network device currently accessed by the terminal does not support the first network slice; indicating that the first radio resource information selected by the terminal to access the first access network device does not support the first network slice; indicating that the first radio resource information selected by the terminal to access the first access network device is incorrect; and indicating that the terminal accesses the first network slice based on the second radio resource information.

In an example, the first access network device does not support the first network slice, and the terminal selects a second access network device based on the second radio resource information, where the second access network device supports the first network slice. For a specific process, refer to the descriptions of step 209, step 309, step 409, and step 509. Details are not repeated.

In an example, the first radio resource information selected by the terminal to access the first access network device does not support the first network slice, and the terminal accesses the first access network device based on the second radio resource information, where the first access network device supports the first network slice. For a specific process, refer to the descriptions of step 209, step 309, step 409, and step 509. Details are not repeated.

In an example, the terminal initiates a wireless connection release procedure, and enters an idle mode. For a specific process, refer to the descriptions of step 208 (where in step 308, the first access network device initiates a wireless connection release procedure), step 408, and step 508. Details are not repeated. The terminal initiates a registration procedure after entering the idle mode, and accesses the first network slice based on the second radio resource information. For a specific process, refer to the descriptions of step 209, step 309, step 409, and step 509. Details are not repeated.

In an example, the terminal receives the second radio resource information from the AMF device via the first access network device. For details of the second radio resource information, refer to step 506 and step 507 in which the AMF device includes, by using the first access network device, the third frequency band priority list information in the NAS response message.

In an example, the terminal receives the second radio resource information from the first access network device. For details of the second radio resource information, refer to step 207 and step 307 in which the first access network device sends the first frequency band priority list information to the terminal. For details of the second radio resource information, refer to step 407a in which the first access network device sends the third frequency band priority list information to the terminal. For details of the second radio resource information, refer to step 507 in which the first access network device sends the second frequency band priority list information to the terminal. Details are not repeated.

In an example, before the terminal receives the second radio resource information from the first access network device, the terminal sends a request message to the first access network device, where the request message carries the identifier of the first network slice, and the request message requests to obtain the second radio resource information. For details, refer to the descriptions of step 407a. Details are not repeated.

The following describes a communication method, applied to a first access network device.

First, the first access network device receives a first message from a terminal, and sends the first message to an access and mobility management function AMF device, where the first message includes an identifier of a first network slice that the terminal requests to access. For this process, refer to the foregoing step 201, step 301, step 401, and step 501. The first message may alternatively be a NAS request message, and may be specifically a registration request message. Other repeated parts are not described again.

Then, the first access network device receives a second message from the AMF device, where the second message includes second radio resource information and first indication information, and the second radio resource information is associated with the first network slice. The second radio resource information may be an RFSP index. The RFSP index may be specifically the first RFSP index in the examples in FIG. 2 and FIG. 3. For details, refer to the first RFSP index in step 206 and step 306. The first access network device may determine first frequency band priority list information corresponding to a first RFSP index, and send the first frequency band priority list information to the terminal. For a process in which the first access network device sends the first frequency band priority list information to the terminal, refer to the foregoing step 207 and step 307. The RFSP index may alternatively be the second RFSP index and the third RFSP index in FIG. 4 and FIG. 5. For details, refer to the second RFSP index and the third RFSP index in step 406 and the second RFSP index in step 506. The first access network device may determine second frequency band priority list information corresponding to the second RFSP index and/or third frequency band priority list information corresponding to the third RFSP index, and send the second frequency band priority list information and/or the third frequency band priority list information to the terminal. For a process in which the first access network device sends the second frequency band priority list information and/or the third frequency band priority list information to the terminal, refer to the foregoing step 407a and step 507. In this case, the second message may be an N2 message.

The first indication information indicates at least one of the following: indicating the first access network device to release a wireless connection; indicating that the first access network device does not support the first network slice; indicating that the first radio resource information selected by the terminal to access the first access network device does not support the first network slice; and indicating that the first radio resource information selected by the terminal to access the first access network device is incorrect. Refer to the descriptions in step 306.

In an example, the second radio resource information is usable for selecting a second access network device for the terminal, the second access network device supports the first network slice, and the first access network device does not support the first network slice; or the second radio resource information is usable for selecting the first access network device for the terminal, the first access network device supports the first network slice, and the first radio resource information selected by the terminal to access the first access network device does not support the first network slice.

In an example, the first access network device releases a wireless connection. For details, refer to the process of step 308 in which the first access network device initiates a wireless connection release procedure.

In an example, the first access network device sends, to the AMF device, first radio resource information selected by the terminal to access the first access network device. For a specific process, refer to the processes of the foregoing step 202a, step 302a, step 402a, and step 502a.

In an example, the second radio resource information received by the first access network device is an RFSP index, and the first access network device sends frequency band priority list information corresponding to the RFSP index to the terminal or the AMF device. The RFSP index herein is the first RFSP index in the examples in FIG. 2 and FIG. 3. For details, refer to the first RFSP index in step 206 and step 306. The first access network device may determine first frequency band priority list information corresponding to the first RFSP index, and send the first frequency band priority list information to the terminal. For a process in which the first access network device sends the first frequency band priority list information to the terminal, refer to the foregoing step 207 and step 307. The RFSP index may alternatively be the second RFSP index and the third RFSP index in FIG. 4 and FIG. 5. For details, refer to the second RFSP index and the third RFSP index in step 406 and the second RFSP index in step 506. The first access network device may determine second frequency band priority list information corresponding to the second RFSP index and/or third frequency band priority list information corresponding to the third RFSP index, and send the second frequency band priority list information and/or the third frequency band priority list information to the terminal. For a process in which the first access network device sends the second frequency band priority list information and/or the third frequency band priority list information to the terminal, refer to the foregoing step 407a and step 507. For a process in which the first access network device sends the frequency band priority list information corresponding to the RFSP index to the AMF device, refer to the process of the foregoing step 506a. To be specific, the first access network device sends the third frequency band priority list information corresponding to the third RFSP index to the AMF device. Details are not repeated.

In an example, before the first access network device sends the frequency band priority list information corresponding to the RFSP index to the terminal, the first access network device receives a request message sent by the terminal, where the request message carries the identifier of the first network slice, the request message requests to obtain the second radio resource information, and the second radio resource information requested by using the request message is the frequency band priority list information. For details, refer to the descriptions of step 407a. Details are not repeated.

The foregoing describes the communication methods in embodiments of this application, and the following describes communication apparatuses in embodiments of this application. The method and the apparatus are based on a same technical idea. The method and the apparatus have similar principles for resolving problems. Therefore, for implementations of the apparatus and the method, refer to each other. Details are not repeated.

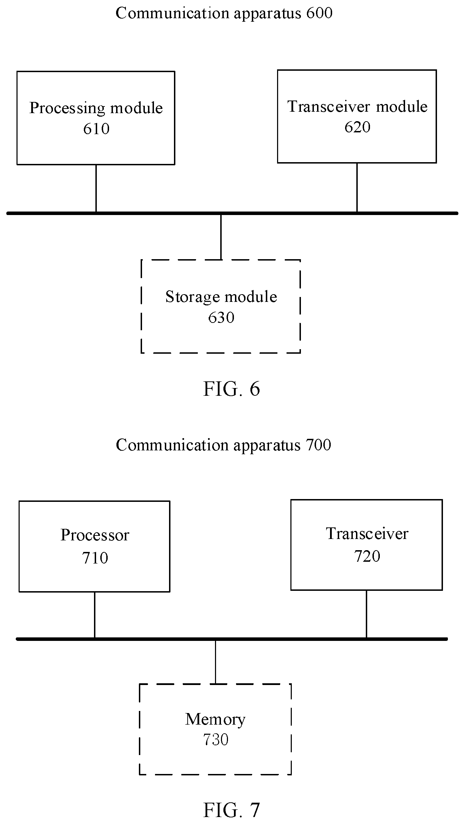

Based on a same technical concept as the foregoing communication methods, as shown in FIG. 6, a communication apparatus 600 is provided. The apparatus 600 may include a transceiver module 620 and a processing module 610, and optionally, further include a storage module 630. The processing module 610 may be separately connected to the storage module 630 and the transceiver module 620, and the storage module 630 may also be connected to the transceiver module 620.

The storage module 630 may include one or more memories. The memory may be a component configured to store a program or data in one or more devices or circuits. The storage module 630 may store computer-executable instructions of the foregoing communication methods, so that the processing module 610 performs the method in the foregoing embodiments. The storage module 630 may be a register, a cache, a RAM, or the like. The storage module 630 may be integrated with the processing module 610. The storage module 630 may be a ROM or another type of static storage device that can store static information and instructions, and the storage module 630 may be independent of the processing module 610. The transceiver module 620 may be an input/output interface, a pin, a circuit, or the like.

In an embodiment, the apparatus 600 can perform the steps performed by the AMF device in the methods in FIG. 2, FIG. 3, FIG. 4, and FIG. 5. The apparatus 600 may be an AMF device, or may be a chip applied to the AMF device.

In an example, the transceiver module 620 is configured to receive a first message from a terminal fromvia a first access network device, where the first message includes an identifier of a first network slice that the terminal requests to access. The processing module 610 is configured to determine that the first access network device does not support the first network slice. The transceiver module 620 is further configured to send a second message to a first communication device, where the second message includes second radio resource information, the second radio resource information is usable for selecting a second access network device for the terminal, the second access network device supports the first network slice, and the first communication device is the first access network device or the terminal.

In an example, the transceiver module 620 is configured to receive a first message from a terminal via a first access network device, where the first message includes an identifier of a first network slice that the terminal requests to access. The processing module 610 is configured to determine that first radio resource information selected by the terminal to access the first access network device does not support the first network slice. The transceiver module 620 is further configured to send a second message to a first communication device, where the second message includes second radio resource information, the second radio resource information is usable for accessing the first access network device for the terminal based on the second radio resource information, the first access network device supports the first network slice, and the first communication device is the first access network device or the terminal.

In an example, the transceiver module 620 is further configured to receive the first radio resource information from the first access network device.

In an example, the transceiver module 620 is further configured to: send a third message to a policy control function PCF device, where the third message includes the first network slice; and receive a fourth message from the PCF device, where the fourth message includes an RFSP index.

In an example, the storage module 630 is configured to store the second radio resource information, first indication information, and the like.

In an embodiment, the apparatus 600 can perform the steps performed by the terminal in the methods in FIG. 2, FIG. 3, FIG. 4, and FIG. 5. The apparatus 600 may be a terminal, or may be a chip applied to the terminal.

In an example, the transceiver module 620 is configured to: send a first message to an access and mobility management function AMF device by using a first access network device, where the first message includes an identifier of a first network slice that the apparatus requests to access; receive second radio resource information, where the second radio resource information is associated with the first network slice; and receive first indication information from the AMF device, where the first indication information indicates at least one of the following:
indicating the apparatus to release a wireless connection;
indicating the apparatus to initiate a registration procedure after entering an idle mode;
indicating that the first access network device currently accessed by the apparatus does not support the first network slice;
indicating that the first radio resource information selected by the apparatus to access the first access network device does not support the first network slice;
indicating that the first radio resource information selected by the apparatus to access the first access network device is incorrect; and
indicating the apparatus to access the first network slice based on the second radio resource information.

In an example, the first access network device does not support the first network slice, and the processing module 610 is configured to select a second access network device based on the second radio resource information, where the second access network device supports the first network slice.

In an example, the first radio resource information selected by the apparatus to access the first access network device does not support the first network slice, and the processing module 610 is configured to access the first access network device based on the second radio resource information, where the first access network device supports the first network slice.

In an example, the processing module 610 is configured to: initiate the registration procedure after initiating a wireless connection release procedure and entering the idle mode, and access the first network slice based on the second radio resource information.

In an example, when receiving the second radio resource information, the transceiver module 620 is specifically configured to: receive the second radio resource information from the AMF device via the first access network device; or receive the second radio resource information from the first access network device.

In an example, before receiving the second radio resource information from the first access network device, the transceiver module 620 is further configured to send a request message to the first access network device, where the request message carries the identifier of the first network slice, and the request message requests to obtain the second radio resource information.

In an example, the storage module 630 is configured to store the second radio resource information, the first indication information, and the like.

In an embodiment, the apparatus 600 can perform the steps performed by the first access network device in the methods in FIG. 2, FIG. 3, FIG. 4, and FIG. 5. The apparatus 600 may be a first access network device, or may be a chip applied to the first access network device.

In an example, the transceiver module 620 is configured to: receive a first message from a terminal, and send the first message to an access and mobility management function AMF device, where the first message includes an identifier of a first network slice that the terminal requests to access; and receive a second message from the AMF device, where the second message includes second radio resource information and first indication information, and the second radio resource information is associated with the first network slice, where
the first indication information indicates at least one of the following:
indicating the apparatus to release a wireless connection;
indicating that the apparatus does not support the first network slice;
indicating that first radio resource information selected by the terminal to access the apparatus does not support the first network slice; and
indicating that the first radio resource information selected by the terminal to access the apparatus is incorrect.

In an example, the processing module 610 is configured to release a wireless connection.

In an example, the transceiver module 620 is further configured to send, to the AMF device, the first radio resource information selected by the terminal to access the apparatus.

In an example, the second radio resource information received by the apparatus is an RFSP index, and the transceiver module 620 is further configured to send frequency band priority list information corresponding to the RFSP index to the terminal or the AMF device.

In an example, before sending the frequency band priority list information corresponding to the RFSP index to the terminal, the transceiver module 620 is further configured to receive a request message sent by the terminal, where the request message carries the identifier of the first network slice, the request message requests to obtain the second radio resource information, and the second radio resource information requested by using the request message is the frequency band priority list information.

In an example, the storage module 630 is configured to store the second radio resource information, the first indication information, and the like.

FIG. 7 is a schematic block diagram of a communication apparatus 700 according to an embodiment of this application. The apparatus 700 includes a processor 710 and a transceiver 720, and optionally, further includes a memory 730. The transceiver may be configured to receive program instructions and transmit the program instructions to the processor, or the transceiver may be configured to perform communication interaction between the apparatus and another communication device, for example, exchange control signaling and/or service data. The transceiver may be a code and/or data read/write transceiver, or the transceiver may be a signal transmission transceiver between a communication processor and a transceiver. The processor 710 and the memory 730 are electrically coupled.

For example, the memory 730 is configured to store a computer program. The processor 710 may be configured to invoke the computer program or instructions stored in the memory, to perform the foregoing communication methods, or perform the foregoing communication methods by using the transceiver 720.

In FIG. 6, the processing module 610 may be implemented by the processor 710, the transceiver module 620 may be implemented by the transceiver 720, and the storage module 630 may be implemented by the memory 730.

In an embodiment, the apparatus 700 can perform the steps performed by the AMF device in the methods in FIG. 2, FIG. 3, FIG. 4, and FIG. 5. The apparatus 700 may be an AMF device, or may be a chip applied to the AMF device.

In an example, the transceiver 720 is configured to receive a first message from a terminal via a first access network device, where the first message includes an identifier of a first network slice that the terminal requests to access. The processor 710 is configured to determine that the first access network device does not support the first network slice. The transceiver 720 is further configured to send a second message to a first communication device, where the second message includes second radio resource information, the second radio resource information is usable for selecting a second access network device for the terminal, the second access network device supports the first network slice, and the first communication device is the first access network device or the terminal.

In an example, the transceiver 720 is configured to receive a first message from a terminal via a first access network device, where the first message includes an identifier of a first network slice that the terminal requests to access. The processor 710 is configured to determine that first radio resource information selected by the terminal to access the first access network device does not support the first network slice. The transceiver 720 is further configured to send a second message to a first communication device, where the second message includes second radio resource information, the second radio resource information is usable for accessing the first access network device for the terminal based on the second radio resource information, the first access network device supports the first network slice, and the first communication device is the first access network device or the terminal.

In an example, the transceiver 720 is further configured to receive the first radio resource information from the first access network device.

In an example, the transceiver 720 is further configured to: send a third message to a policy control function PCF device, where the third message includes the first network slice; and receive a fourth message from the PCF device, where the fourth message includes an RFSP index.

In an example, the memory 730 is configured to store the second radio resource information, first indication information, and the like.

In an embodiment, the apparatus 700 can perform the steps performed by the terminal in the methods in FIG. 2, FIG. 3, FIG. 4, and FIG. 5. The apparatus 700 may be a terminal, or may be a chip used in the terminal.

In an example, the transceiver 720 is configured to: send a first message to an access and mobility management function AMF device by using a first access network device, where the first message includes an identifier of a first network slice that the apparatus requests to access; receive second radio resource information, where the second radio resource information is associated with the first network slice; and receive first indication information from the AMF device, where the first indication information indicates at least one of the following:
indicating the apparatus to release a wireless connection;
indicating the apparatus to initiate a registration procedure after entering an idle mode;
indicating that the first access network device currently accessed by the apparatus does not support the first network slice;
indicating that the first radio resource information selected by the apparatus to access the first access network device does not support the first network slice;
indicating that the first radio resource information selected by the apparatus to access the first access network device is incorrect; and
indicating the apparatus to access the first network slice based on the second radio resource information.

In an example, the first access network device does not support the first network slice, and the processor 710 is configured to select a second access network device based on the second radio resource information, where the second access network device supports the first network slice.

In an example, the first radio resource information selected by the apparatus to access the first access network device does not support the first network slice, and the processor 710 is configured to access the first access network device based on the second radio resource information, where the first access network device supports the first network slice.

In an example, the processor 710 is configured to: initiate the registration procedure after initiating a wireless connection release procedure and entering the idle mode. and access the first network slice based on the second radio resource information.

In an example, when receiving the second radio resource information, the transceiver 720 is specifically configured to: receive the second radio resource information from the AMF device via the first access network device; or receive the second radio resource information from the first access network device.

In an example, before receiving the second radio resource information from the first access network device, the transceiver 720 is further configured to send a request message to the first access network device, where the request message carries the identifier of the first network slice, and the request message requests to obtain the second radio resource information.

In an example, the memory 730 is configured to store the second radio resource information, the first indication information, and the like.

In an embodiment, the apparatus 700 can perform the steps performed by the first access network device in the methods in FIG. 2, FIG. 3, FIG. 4, and FIG. 5. The apparatus 700 may be a first access network device, or may be a chip applied to the first access network device.

In an example, the transceiver 720 is configured to: receive a first message from a terminal, and send the first message to an access and mobility management function AMF device, where the first message includes an identifier of a first network slice that the terminal requests to access; and receive a second message from the AMF device, where the second message includes second radio resource information and first indication information, and the second radio resource information is associated with the first network slice, where
the first indication information indicates at least one of the following:
indicating the apparatus to release a wireless connection;
indicating that the apparatus does not support the first network slice;
indicating that first radio resource information selected by the terminal to access the apparatus does not support the first network slice; and
indicating that the first radio resource information selected by the terminal to access the apparatus is incorrect.

In an example, the processor 710 is configured to release a wireless connection.

In an example, the transceiver 720 is further configured to send, to the AMF device, the first radio resource information selected by the terminal to access the apparatus.

In an example, the second radio resource information received by the apparatus is an RFSP index, and the transceiver 720 is further configured to send frequency band priority list information corresponding to the RFSP index to the terminal or the AMF device.

In an example, before sending the frequency band priority list information corresponding to the RFSP index to the terminal, the transceiver 720 is further configured to receive a request message sent by the terminal, where the request message carries the identifier of the first network slice, the request message requests to obtain the second radio resource information, and the second radio resource information requested by using the request message is the frequency band priority list information.

In an example, the memory 730 is configured to store the second radio resource information, the first indication information, and the like.

The foregoing processor may be a central processing unit (central processing unit, CPU), a network processor (network processor, NP), or a combination of the CPU and the NP. The processor may further include a hardware chip or another general-purpose processor. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable gate array (field programmable gate array, FPGA), a generic array logic (generic array logic, GAL) and another programmable logic device, a discrete gate or a transistor logic device, a discrete hardware component, or the like, or any combination thereof. The general-purpose processor may be a microprocessor, or the processor may be any conventional processor or the like.

It may be understood that the memory mentioned in embodiments of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), used as an external cache. Through example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory described in this application is intended to include but is not limited to these memories and any memory of another proper type.

The transceiver apparatus, the interface circuit, or the transceiver in embodiments of this application may include a separate transmitter and/or a separate receiver, or the transmitter and the receiver may be integrated. The transceiver apparatus, the interface circuit, or the transceiver may work under an indication of a corresponding processor. Optionally, the transmitter may correspond to a transmitter machine in a physical device, and the receiver may correspond to a receiver machine in the physical device.

An embodiment of this application further provides a computer-readable storage medium that stores a computer program. When the computer program is executed by a computer, the computer may be enabled to perform the foregoing communication method, for example, perform the communication methods in the examples in FIG. 2, FIG. 3, FIG. 4, and FIG. 5.

An embodiment of this application further provides a computer program product including instructions. When the computer program product runs on a computer, the computer may be enabled to perform the communication methods provided above, for example, perform the communication methods in the examples in FIG. 2, FIG. 3, FIG. 4, and FIG. 5.

An embodiment of this application further provides a communication system. The communication system includes an AMF device and a first access network device that perform the foregoing communication methods. Optionally, the system may further include a terminal. Optionally, the system may further include a PCF device.

Persons skilled in the art should understand that the embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, a CD-ROM, an optical memory, and the like) that include computer usable program code.

This application is described with reference to the flowcharts and/or block diagrams of the method, the device (system), and the computer program product according to the embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a special-purpose computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

These computer program instructions may be stored in a computer-readable memory that can indicate the computer or the another programmable data processing device to work in a specific manner, so that the instructions stored in the computer-readable memory generate an artifact that includes an instruction apparatus. The instruction apparatus implements the specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specified function in one or more processes in the flowcharts and/or in one or more blocks in the block diagrams.

Although some preferred embodiments of this application have been described, persons skilled in the art can make changes and modifications to these embodiments once they learn the basic inventive concept. Therefore, the following claims are intended to be construed as to cover the preferred embodiments and all changes and modifications falling within the scope of said claims.

Clearly, persons skilled in the art can make various modifications and variations to embodiments of this application without departing from the scope of embodiments of this application. In this way, this application is intended to cover these modifications and variations to embodiments of this application provided that they fall within the scope of protection defined by the following claims.

## Claims

1. A communication method, wherein the method comprises:
receiving (201, 301, 401, 501), by an access and mobility management function device, a first message from a terminal via a first access network device, wherein the first message comprises an identifier of a first network slice that the terminal requests to access;
determining (202, 302, 402, 502), by the access and mobility management function device, that a tracking area where the first access network device is located does not support the first network slice; and
sending (206, 306, 406, 506), by the access and mobility management function device, a second message to the first access network device, wherein the second message comprises second radio resource information, wherein the second radio resource information is a radio access technology/frequency selection priority RFSP index, and the second radio resource information is usable for selecting a target access network device for the terminal, the target access network device supports the first network slice.

2. The method according to claim 1, wherein the access and mobility management function device rejects access of the terminal to the first network slice.

3. The method according to any one of claims 1 to 2, wherein the second message further comprises first indication information; and
the first indication information indicates at least one of the following:
indicating the first access network device to release a wireless connection;
indicating that the first access network device does not support the first network slice;
indicating that first radio resource information selected by the terminal to access the first access network device does not support the first network slice; and
indicating that the first radio resource information selected by the terminal to access the first access network device is incorrect.

4. The method according to any one of claims 1 to 3, further comprising:
sending (204, 304, 404, 504), by the access and mobility management function device, a third message to a policy control function device, wherein the third message comprises the identifier of the first network slice; and
receiving (205, 305, 405, 505), by the access and mobility management function device, a fourth message from the policy control function device, wherein the fourth message comprises the RFSP index corresponding to the first network slice.

5. The method according to any one of claims 1 to 4, wherein the target access network device is a second access network device that is different from the first access network device.

6. A communication method, wherein the method comprises:
receiving (201, 301, 401, 501), by a first access network device, a first message from a terminal, and sending (201, 301, 401, 501) the first message to an access and mobility management function device, wherein the first message comprises an identifier of a first network slice that the terminal requests to access, wherein a tracking area where the first access network device is located does not support the first network slice;
receiving (206, 306, 406, 506), by the first access network device, a second message from the access and mobility management function device, wherein the second message comprises second radio resource information and first indication information, and the second radio resource information is a radio access technology/frequency selection priority RFSP index associated with the first network slice; and
sending (207, 307, 407, 507), by the first access network device to the terminal, frequency band information corresponding to the RFSP index, wherein the frequency band information is usable for the terminal to access the first network slice by using a target access network device, the target access network device supports the first network slice;
wherein
the first indication information indicates at least one of the following:
indicating the first access network device to release a wireless connection;
indicating that the first access network device does not support the first network slice;
indicating that first radio resource information selected by the terminal to access the first access network device does not support the first network slice; and
indicating that the first radio resource information selected by the terminal to access the first access network device is incorrect.

7. The method according to claim 6, further comprising:
releasing (208, 308, 408, 508), by the first access network device, a wireless connection.

8. A communication apparatus, wherein the apparatus comprises: means configured to perform the method according to any one of claims 1 to 5.

9. A communication apparatus, wherein the apparatus comprises: means configured to perform the method according to any one of claims 6 to 7.

10. A computer-readable storage medium, wherein the computer-readable storage medium stores computer-readable instructions, and when a computer reads and executes the computer-readable instructions, the computer is enabled to implement the method according to any one of claims 1 to 5, or implement the method according to any one of claims 6 to 7.

11. A communication method, wherein the method comprises:
receiving (201, 301, 401, 501), by an access and mobility management function device, a first message from a terminal via a first access network device, wherein the first message comprises an identifier of a first network slice that the terminal requests to access;
determining (202, 302, 402, 502), by the access and mobility management function device, that a tracking area where the first access network device is located does not support the first network slice;
sending (206, 306, 406, 506), by the access and mobility management function device, a second message to the first access network device, wherein the second message comprises second radio resource information, wherein the second radio resource information is a radio access technology/frequency selection priority RFSP index, and the second radio resource information is usable for selecting a target access network device for the terminal, the target access network device supports the first network slice;
receiving (206, 306, 406, 506), by the first access network device, the second message; and
sending (207, 307, 407, 507), by the first access network device to the terminal, frequency band information corresponding to the RFSP index.

12. The method according to claim 11, wherein the access and mobility management function device rejects access of the terminal to the first network slice.

13. The method according to any one of claim 11 to 12, wherein the second message further comprises first indication information; and
the first indication information indicates at least one of the following:
indicating the first access network device to release a wireless connection;
indicating that the first access network device does not support the first network slice;
indicating that the first radio resource information selected by the terminal to access the first access network device does not support the first network slice; and
indicating that the first radio resource information selected by the terminal to access the first access network device is incorrect.

14. The method according to any one of claims 11 to 13, further comprising:
sending (204, 304, 404, 504), by the access and mobility management function device, a third message to a policy control function device, wherein the third message comprises the identifier of the first network slice; and
receiving (205, 305, 405, 505), by the access and mobility management function device, a fourth message from the policy control function device, wherein the fourth message comprises the RFSP index corresponding to the first network slice.

15. A communication system, comprising an access and mobility management function device, and a first access network device;
wherein the access and mobility management function device is configured to perform the method according to any one of claims 1 to 5;
wherein the first access network device is configured to perform the method according to any one of claims 6 to 7.

## Patentansprüche

1. Kommunikationsverfahren, wobei das Verfahren Folgendes umfasst:
Empfangen (201, 301, 401, 501), durch eine Zugriffs- und Mobilitätsverwaltungsfunktionseinrichtung, einer ersten Nachricht von einem Endgerät über eine erste Zugriffsnetzwerkeinrichtung, wobei die erste Nachricht eine Kennung einer ersten Netzwerkscheibe umfasst, auf die das Endgerät anfordert, zuzugreifen;
Bestimmen (202, 302, 402, 502), durch die Zugriffs- und Mobilitätsverwaltungsfunktionseinrichtung, dass ein Tracking-Bereich, in dem sich die erste Zugriffsnetzwerkeinrichtung befindet, die erste Netzwerkscheibe nicht unterstützt; und
Senden (206, 306, 406, 506), durch die Zugriffs- und Mobilitätsverwaltungsfunktionseinrichtung, einer zweiten Nachricht an die erste Zugriffsnetzwerkeinrichtung, wobei die zweite Nachricht zweite Funkressourceninformationen umfasst, wobei die zweiten Funkressourceninformationen ein Funkzugriffstechnik-/Frequenzauswahlprioritätsindex, RFSP-Index, sind und die zweiten Funkressourceninformationen zum Auswählen einer Zielzugriffsnetzwerkeinrichtung für das Endgerät verwendbar sind, wobei die Zielzugriffsnetzwerkeinrichtung die erste Netzwerkscheibe unterstützt.

2. Verfahren nach Anspruch 1, wobei die Zugriffs- und Mobilitätsverwaltungsfunktionseinrichtung den Zugriff des Endgeräts auf die erste Netzwerkscheibe ablehnt.

3. Verfahren nach einem der Ansprüche 1 bis 2, wobei die zweite Nachricht ferner erste Angabeinformationen umfasst; und
die ersten Angabeinformationen mindestens eines von Folgendem angeben:
Angeben an die erste Zugriffsnetzwerkeinrichtung, eine drahtlose Verbindung freizugeben;
Angeben, dass die erste Zugriffsnetzwerkeinrichtung die erste Netzwerkscheibe nicht unterstützt;
Angeben, dass erste Funkressourceninformationen, die durch das Endgerät ausgewählt sind, um auf die erste Zugriffsnetzwerkeinrichtung zuzugreifen, die erste Netzwerkscheibe nicht unterstützen; und
Angeben, dass die ersten Funkressourceninformationen, die durch das Endgerät ausgewählt sind, um auf die erste Zugriffsnetzwerkeinrichtung zuzugreifen, falsch sind.

4. Verfahren nach einem der Ansprüche 1 bis 3, ferner umfassend:
Senden (204, 304, 404, 504), durch die Zugriffs- und Mobilitätsverwaltungsfunktionseinrichtung, einer dritten Nachricht an eine Richtliniensteuerungsfunktionseinrichtung, wobei die dritte Nachricht die Kennung der ersten Netzwerkscheibe umfasst; und
Empfangen (205, 305, 405, 505), durch die Zugriffs- und Mobilitätsverwaltungsfunktionseinrichtung, einer vierten Nachricht von der Richtliniensteuerungsfunktionseinrichtung, wobei die vierte Nachricht den RFSP-Index umfasst, welcher der ersten Netzwerkscheibe entspricht.

5. Verfahren nach einem der Ansprüche 1 bis 4, wobei die Zielzugriffsnetzwerkeinrichtung eine zweite Zugriffsnetzwerkeinrichtung ist, die sich von der ersten Zugriffsnetzwerkeinrichtung unterscheidet.

6. Kommunikationsverfahren, wobei das Verfahren Folgendes umfasst:
Empfangen (201, 301, 401, 501), durch eine erste Zugriffsnetzwerkeinrichtung, einer ersten Nachricht von einem Endgerät und Senden (201, 301, 401, 501) der ersten Nachricht an eine Zugriffs- und Mobilitätsverwaltungsfunktionseinrichtung, wobei die erste Nachricht eine Kennung einer ersten Netzwerkscheibe umfasst, auf die das Endgerät anfordert, zuzugreifen, wobei ein Tracking-Bereich, in dem sich die erste Zugriffsnetzwerkeinrichtung befindet, die erste Netzwerkscheibe nicht unterstützt;
Empfangen (206, 306, 406, 506), durch die erste Zugriffsnetzwerkeinrichtung, einer zweiten Nachricht von der Zugriffs- und Mobilitätsverwaltungsfunktionseinrichtung, wobei die zweite Nachricht zweite Funkressourceninformationen und erste Angabeinformationen umfasst und die zweiten Funkressourceninformationen ein Funkzugriffstechnik-/Frequenzauswahlprioritätsindex, RFSP-Index, sind, welcher der ersten Netzwerkscheibe zugeordnet ist; und
Senden (207, 307, 407, 507), durch die erste Zugriffsnetzwerkeinrichtung an das Endgerät, von Frequenzbandinformationen, die dem RFSP-Index entsprechen, wobei die Frequenzbandinformationen für das Endgerät dazu verwendbar sind, unter Verwendung einer Zielzugriffsnetzwerkeinrichtung auf die erste Netzwerkscheibe zuzugreifen, wobei die Zielzugriffsnetzwerkeinrichtung die erste Netzwerkscheibe unterstützt;
wobei
die ersten Angabeinformationen mindestens eines von Folgendem angeben:
Angeben an die erste Zugriffsnetzwerkeinrichtung, eine drahtlose Verbindung freizugeben;
Angeben, dass die erste Zugriffsnetzwerkeinrichtung die erste Netzwerkscheibe nicht unterstützt;
Angeben, dass erste Funkressourceninformationen, die durch das Endgerät ausgewählt sind, um auf die erste Zugriffsnetzwerkeinrichtung zuzugreifen, die erste Netzwerkscheibe nicht unterstützen; und
Angeben, dass die ersten Funkressourceninformationen, die durch das Endgerät ausgewählt sind, um auf die erste Zugriffsnetzwerkeinrichtung zuzugreifen, falsch sind.

7. Verfahren nach Anspruch 6, ferner umfassend:
Freigeben (208, 308, 408, 508), durch die erste Zugriffsnetzwerkeinrichtung, einer drahtlosen Verbindung.

8. Kommunikationsvorrichtung, wobei die Vorrichtung Folgendes umfasst: Mittel, die dazu konfiguriert sind, das Verfahren nach einem der Ansprüche 1 bis 5 durchzuführen.

9. Kommunikationsvorrichtung, wobei die Vorrichtung Folgendes umfasst: Mittel, die dazu konfiguriert sind, das Verfahren nach einem der Ansprüche 6 bis 7 durchzuführen.

10. Computerlesbares Speichermedium, wobei das computerlesbare Speichermedium computerlesbare Anweisungen speichert und, wenn ein Computer die computerlesbaren Anweisungen liest und ausführt, es dem Computer ermöglicht wird, das Verfahren nach einem der Ansprüche 1 bis 5 umzusetzen oder das Verfahren nach einem der Ansprüche 6 bis 7 umzusetzen.

11. Kommunikationsverfahren, wobei das Verfahren Folgendes umfasst:
Empfangen (201, 301, 401, 501), durch eine Zugriffs- und Mobilitätsverwaltungsfunktionseinrichtung, einer ersten Nachricht von einem Endgerät über eine erste Zugriffsnetzwerkeinrichtung, wobei die erste Nachricht eine Kennung einer ersten Netzwerkscheibe umfasst, auf die das Endgerät anfordert, zuzugreifen;
Bestimmen (202, 302, 402, 502), durch die Zugriffs- und Mobilitätsverwaltungsfunktionseinrichtung, dass ein Tracking-Bereich, in dem sich die erste Zugriffsnetzwerkeinrichtung befindet, die erste Netzwerkscheibe nicht unterstützt;
Senden (206, 306, 406, 506), durch die Zugriffs- und Mobilitätsverwaltungsfunktionseinrichtung, einer zweiten Nachricht an die erste Zugriffsnetzwerkeinrichtung, wobei die zweite Nachricht zweite Funkressourceninformationen umfasst, wobei die zweiten Funkressourceninformationen ein Funkzugriffstechnik-/Frequenzauswahlprioritätsindex, RFSP-Index, sind und die zweiten Funkressourceninformationen zum Auswählen einer Zielzugriffsnetzwerkeinrichtung für das Endgerät verwendbar sind, wobei die Zielzugriffsnetzwerkeinrichtung die erste Netzwerkscheibe unterstützt;
Empfangen (206, 306, 406, 506), durch die erste Zugriffsnetzwerkeinrichtung, der zweiten Nachricht; und
Senden (207, 307, 407, 507), durch die erste Zugriffsnetzwerkeinrichtung an das Endgerät, von Frequenzbandinformationen, die dem RFSP-Index entsprechen.

12. Verfahren nach Anspruch 11, wobei die Zugriffs- und Mobilitätsverwaltungsfunktionseinrichtung den Zugriff des Endgeräts auf die erste Netzwerkscheibe ablehnt.

13. Verfahren nach einem der Ansprüche 11 bis 12, wobei die zweite Nachricht ferner erste Angabeinformationen umfasst; und die ersten Angabeinformationen mindestens eines von Folgendem angeben:
Angeben an die erste Zugriffsnetzwerkeinrichtung, eine drahtlose Verbindung freizugeben;
Angeben, dass die erste Zugriffsnetzwerkeinrichtung die erste Netzwerkscheibe nicht unterstützt;
Angeben, dass die ersten Funkressourceninformationen, die durch das Endgerät ausgewählt sind, um auf die erste Zugriffsnetzwerkeinrichtung zuzugreifen, die erste Netzwerkscheibe nicht unterstützen; und
Angeben, dass die ersten Funkressourceninformationen, die durch das Endgerät ausgewählt sind, um auf die erste Zugriffsnetzwerkeinrichtung zuzugreifen, falsch sind.

14. Verfahren nach einem der vorhergehenden Ansprüche 11 bis 13, ferner umfassend:
Senden (204, 304, 404, 504), durch die Zugriffs- und Mobilitätsverwaltungsfunktionseinrichtung, einer dritten Nachricht an eine Richtliniensteuerungsfunktionseinrichtung, wobei die dritte Nachricht die Kennung der ersten Netzwerkscheibe umfasst; und
Empfangen (205, 305, 405, 505), durch die Zugriffs- und Mobilitätsverwaltungsfunktionseinrichtung, einer vierten Nachricht von der Richtliniensteuerungsfunktionseinrichtung, wobei die vierte Nachricht den RFSP-Index umfasst, welcher der ersten Netzwerkscheibe entspricht.

15. Kommunikationssystem, umfassend eine Zugriffs- und Mobilitätsverwaltungsfunktionseinrichtung und eine erste Zugriffsnetzwerkeinrichtung;
wobei die Zugriffs- und Mobilitätsverwaltungsfunktionseinrichtung dazu konfiguriert ist, das Verfahren nach einem der Ansprüche 1 bis 5 durchzuführen;
wobei die erste Zugriffsnetzwerkeinrichtung dazu konfiguriert ist, das Verfahren nach einem der Ansprüche 6 bis 7 durchzuführen.

## Revendications

1. Procédé de communication, dans lequel le procédé comprend :
la réception (201, 301, 401, 501), par un dispositif de fonction de gestion d'accès et de mobilité, d'un premier message provenant d'un terminal par l'intermédiaire d'un premier dispositif de réseau d'accès, dans lequel le premier message comprend un identifiant d'une première tranche de réseau à laquelle le terminal demande d'accéder ;
la détermination (202, 302, 402, 502), par le dispositif de fonction de gestion d'accès et de mobilité, qu'une zone de suivi où se trouve le premier dispositif de réseau d'accès ne prend pas en charge la première tranche de réseau ; et
l'envoi (206, 306, 406, 506), par le dispositif de fonction de gestion d'accès et de mobilité, d'un deuxième message au premier dispositif de réseau d'accès, dans lequel le deuxième message comprend des secondes informations de ressources radio, dans lequel les secondes informations de ressources radio sont un indice de priorité de sélection de technologie/fréquence d'accès radio, RFSP, et les secondes informations de ressources radio sont utilisables pour sélectionner un dispositif de réseau d'accès cible pour le terminal, le dispositif de réseau d'accès cible prend en charge la première tranche de réseau.

2. Procédé selon la revendication 1, dans lequel le dispositif de fonction de gestion d'accès et de mobilité rejette l'accès du terminal à la première tranche de réseau.

3. Procédé selon l'une quelconque des revendications 1 et 2, dans lequel le deuxième message comprend également des premières informations d'indication ; et
la première information d'indication indique au moins l'un des éléments suivants :
l'indication du premier dispositif réseau d'accès à libérer une connexion sans fil ;
l'indication que le premier dispositif de réseau d'accès ne prend pas en charge la première tranche de réseau ;
l'indication que des premières informations de ressources radio sélectionnées par le terminal pour accéder au premier dispositif de réseau d'accès ne prennent pas en charge la première tranche de réseau ; et
l'indication que les premières informations de ressources radio sélectionnées par le terminal pour accéder au premier dispositif réseau d'accès sont incorrectes.

4. Procédé selon l'une quelconque des revendications 1 à 3, comprenant également :
l'envoi (204, 304, 404, 504), par le dispositif de fonction de gestion d'accès et de mobilité, d'un troisième message à un dispositif de fonction de commande de politique, dans lequel le troisième message comprend l'identifiant de la première tranche de réseau ; et
la réception (205, 305, 405, 505), par le dispositif de fonction de gestion d'accès et de mobilité, d'un quatrième message provenant du dispositif de fonction de commande de politique, dans lequel le quatrième message comprend l'indice RFSP correspondant à la première tranche de réseau.

5. Procédé selon l'une quelconque des revendications 1 à 4, dans lequel le dispositif de réseau d'accès cible est un second dispositif de réseau d'accès qui est différent du premier dispositif de réseau d'accès.

6. Procédé de communication, dans lequel le procédé comprend :
la réception (201, 301, 401, 501), par un premier dispositif de réseau d'accès, d'un premier message provenant d'un terminal, et l'envoi (201, 301, 401, 501) du premier message à un dispositif de fonction de gestion d'accès et de mobilité, dans lequel le premier message comprend un identifiant d'une première tranche de réseau à laquelle le terminal demande d'accéder, dans lequel une zone de suivi où se trouve le premier dispositif de réseau d'accès ne prend pas en charge la première tranche de réseau ;
la réception (206, 306, 406, 506), par le premier dispositif de réseau d'accès, d'un deuxième message provenant du dispositif de gestion d'accès et de mobilité, dans lequel le deuxième message comprend des secondes informations de ressources radio et des premières informations d'indication, et les secondes informations de ressources radio sont un indice RFSP de priorité de sélection de technologie/fréquence d'accès radio associé à la première tranche de réseau ; et
l'envoi (207, 307, 407, 507), par le premier dispositif de réseau d'accès au terminal, d'informations de bande de fréquence correspondant à l'indice RFSP, dans lequel les informations de bande de fréquence sont utilisables pour que le terminal accède à la première tranche de réseau à l'aide d'un dispositif de réseau d'accès cible, le dispositif de réseau d'accès cible prend en charge la première tranche de réseau ;
dans lequel
la première information d'indication indique au moins l'un des éléments suivants :
l'indication du premier dispositif réseau d'accès à libérer une connexion sans fil ;
l'indication que le premier dispositif de réseau d'accès ne prend pas en charge la première tranche de réseau ;
l'indication que des premières informations de ressources radio sélectionnées par le terminal pour accéder au premier dispositif de réseau d'accès ne prennent pas en charge la première tranche de réseau ; et
l'indication que les premières informations de ressources radio sélectionnées par le terminal pour accéder au premier dispositif réseau d'accès sont incorrectes.

7. Procédé selon la revendication 6, comprenant également :
la libération (208, 308, 408, 508), par le premier dispositif de réseau d'accès, d'une connexion sans fil.

8. Appareil de communication, dans lequel l'appareil comprend : des moyens configurés pour réaliser le procédé selon l'une quelconque des revendications 1 à 5.

9. Appareil de communication, dans lequel l'appareil comprend : des moyens configurés pour réaliser le procédé selon l'une quelconque des revendications 6 et 7.

10. Support de stockage lisible par ordinateur, dans lequel le support de stockage lisible par ordinateur stocke des instructions lisibles par ordinateur, et lorsqu'un ordinateur lit et exécute les instructions lisibles par ordinateur, l'ordinateur est autorisé à mettre en œuvre le procédé selon l'une quelconque des revendications 1 à 5, ou à mettre en œuvre le procédé selon l'une quelconque des revendications 6 et 7.

11. Procédé de communication, dans lequel le procédé comprend :
la réception (201, 301, 401, 501), par un dispositif de fonction de gestion d'accès et de mobilité, d'un premier message provenant d'un terminal par l'intermédiaire d'un premier dispositif de réseau d'accès, dans lequel le premier message comprend un identifiant d'une première tranche de réseau à laquelle le terminal demande d'accéder ;
la détermination (202, 302, 402, 502), par le dispositif de fonction de gestion d'accès et de mobilité, qu'une zone de suivi où se trouve le premier dispositif de réseau d'accès ne prend pas en charge la première tranche de réseau ;
l'envoi (206, 306, 406, 506), par le dispositif de fonction de gestion d'accès et de mobilité, d'un deuxième message au premier dispositif de réseau d'accès, dans lequel le deuxième message comprend des secondes informations de ressources radio, dans lequel les secondes informations de ressources radio sont un indice RFSP de priorité de sélection de technologie/fréquence d'accès radio, et les secondes informations de ressources radio sont utilisables pour sélectionner un dispositif de réseau d'accès cible pour le terminal, le dispositif de réseau d'accès cible prend en charge la première tranche de réseau ;
la réception (206, 306, 406, 506), par le premier dispositif de réseau d'accès, du deuxième message ; et
l'envoi (207, 307, 407, 507), par le premier dispositif de réseau d'accès au terminal, d'informations de bande de fréquence correspondant à l'indice RFSP.

12. Procédé selon la revendication 11, dans lequel le dispositif de fonction de gestion d'accès et de mobilité rejette l'accès du terminal à la première tranche de réseau.

13. Procédé selon l'une quelconque des revendications 11 et 12, dans lequel le deuxième message comprend également des premières informations d'indication ; et
la première information d'indication indique au moins l'un des éléments suivants :
l'indication du premier dispositif réseau d'accès à libérer une connexion sans fil ;
l'indication que le premier dispositif de réseau d'accès ne prend pas en charge la première tranche de réseau ;
l'indication que les premières informations de ressources radio sélectionnées par le terminal pour accéder au premier dispositif de réseau d'accès ne prennent pas en charge la première tranche de réseau ; et
l'indication que les premières informations de ressources radio sélectionnées par le terminal pour accéder au premier dispositif réseau d'accès sont incorrectes.

14. Procédé selon l'une quelconque des revendications 11 à 13, comprenant également :
l'envoi (204, 304, 404, 504), par le dispositif de fonction de gestion d'accès et de mobilité, d'un troisième message à un dispositif de fonction de commande de politique, dans lequel le troisième message comprend l'identifiant de la première tranche de réseau ; et
la réception (205, 305, 405, 505), par le dispositif de fonction de gestion d'accès et de mobilité, d'un quatrième message provenant du dispositif de fonction de commande de politique, dans lequel le quatrième message comprend l'indice RFSP correspondant à la première tranche de réseau.

15. Système de communication, comprenant un dispositif de fonction de gestion d'accès et de mobilité, et un premier dispositif de réseau d'accès ;
dans lequel le dispositif de fonction de gestion d'accès et de mobilité est configuré pour réaliser le procédé selon l'une quelconque des revendications 1 à 5 ;
dans lequel le premier dispositif de réseau d'accès est configuré pour réaliser le procédé selon l'une quelconque des revendications 6 et 7.
